# EUROPÄISCHE PATENTSCHRIFT

(11) **EP 2 750 840 B1**
(45) Veröffentlichungstag und Bekanntmachung des Hinweises auf die Patenterteilung: **17.11.2021**
(21) Anmeldenummer: 12750987.5
(22) Anmeldetag: 19.07.2012
(51) Int. Cl.: B25J 15/02

(54) **MODULARER GREIFMECHANISMUS FÜR SCHWERE LASTEN**
MODULAR GRIPPING MECHANISM FOR HEAVY LOADS
MÉCANISME DE PRÉHENSION MODULAIRE POUR CHARGES LOURDES

(30) Priorität: 20.07.2011 DE 102011108148
(43) Veröffentlichungstag der Anmeldung: 09.07.2014
(73) Patentinhaber: SAADAT, M. Mohsen, D-59494 Soest (DE)
(72) Erfinder: SAADAT, M. Mohsen, D-59494 Soest (DE)
(86) Internationale Anmeldenummer: PCT/DE2012/000735
(87) Internationale Veröffentlichungsnummer: WO 2013/010532

(56) Entgegenhaltungen:
- DE-A1- 4 206 708
- DE-A1- 4 413 342
- DE-C1- 4 411 319

## Beschreibung

Die Erfindung betrifft einen modular aufgebauten Greifmechanismus für Roboter, Maschinen und Handhabungsgeräte mit wenigstens einem Fingermodul, das aus einer Schlitteneinheit besteht, wobei der Schlitten entweder unmittelbar oder mittels anderen Mechanismen einen Greiferfinger trägt, der gegen einen anderen feststehenden oder beweglichen Greiferfinger arbeitet.

WO 2006/034238 A2 zeigt einen Greifmechanismus derselben Gattung mit zwei Greiferfingern, die jeweils durch ein Schubgelenk auf drei Stangen geführt werden. Die hohle Mitte des Schlittens ist als Pneumatikzylinder ausgeführt, wobei die Druckluft über drei axiale Bohrungen innerhalb der Kolbenstange in die Zylinderkammer gelangt und die Synchronisation der beiden Greiferfinger mittels Zahnstangen und Zahnrad erfolgt. Bei ausgefahrenen Greiferfingern ist dieser Greifmechanismus sehr torsionsweich und kann bei langen Greiferfingern keine schweren Lasten waagerecht halten. Außerdem ist es nicht möglich, nach diesem Prinzip einen Greifmechanismus mit mehr als zwei Fingern zu bauen. DE-4206708 offenbart einen Greifmechanismus für Handhabungsgeräte.

Demgegenüber liegt der Erfindung die Aufgabe zugrunde, ein modular aufbauendes Greifersystem für besonders schwere Lasten derart zu kreieren, das mit einem Minimum an Materialaufwand und Eigengewicht die höchste Belastbarkeit in Bezug auf Biegung und Torsion und die höchste Flexibilität hinsichtlich der Fingerzahl, Fingeranordnung, Wahl des Antriebes und der geometrischen Anordnung der Finger erreicht.

Diese Aufgabe wird erfindungsgemäß mit den in Anspruch 1 angegebenen Merkmalen gelöst.

Die Unteransprüche stellen vorteilhafte Weiterbildungen der Erfindung dar.

In einfachster Ausführung besitzt ein erfindungsgemäßer Greifmechanismus einen beweglichen Greiferfinger, der am Schlitten eines Fingermoduls lösbar und in seiner Position verstellbar befestigt ist und gegen einen am Flansch befestigten unbeweglichen Greiferfinger arbeitet.

Die Fingermodule besitzen auf einer Stirnseite nach oben und nach unten überstehende Laschen, die zur Befestigung an einem Flanschkasten dienen. Die Fingermodule werden in gewünschter Anzahl und geometrischer Anordnung jeweils mit ihren unteren Laschen in Umfangsnuten einer Flanschplatte als Seitenwände eines Flanschkastens senkrecht hineingesteckt. Eine Frontplatte mit analogen Nuten wird als Deckel auf die oberen Laschen der Stirnseiten gesetzt und mit Hilfe von Zugankern gegen die Flanschplatte angezogen. Somit entsteht ein Greifmechanismus mit einem sehr stabilen Flanschkasten, an dem die Fingermodule radial befestigt sind.

Jedes Fingermodul besitzt eine Schlitteneinheit. Jede Schlitteneinheit besitzt einen Schlitten und ein Gehäuse bestehend aus einem geschlossenen Rahmen von mindestens vier Seiten und eine fünfte Seite optional als Boden. Die vier Seiten greifen formschlüssig ineinander. Der Boden ragt entweder ganz oder mit einem Absatz rundherum an allen vier Seiten in den Gehäuserahmen hinein und verleiht dem Rahmen als einen fünfseitig geschlossenen und in sich formschlüssig verschachtelten Kasten die maximale Verformungs- und Verwindungssteifigkeit. Bei Bedarf kann auch die sechste Seite der Schlitteneinheit durch einen geschlitzten Boden derart geschlossen werden, dass der Greiferfinger nur noch aus einem Langloch herausragt.

Zwischen zwei sich gegenüberliegenden, innere und äußere Stirnseiten des Gehäuserahmens verlaufen viele parallel zu einander, vorzugsweise auf einem Zylinder rohrförmig angeordnete Stangen, die auf Zug vorgespannt sind und die anderen zwei oder drei zu den Stangen parallel liegenden Seiten auf Druck spannen. Die auf Zug vorgespannten Stangen dienen ganz oder teilweise als Führungsstangen, auf denen der Schlitten der Schlitteneinheit gleitet. Die Zugspannung der Stangen führt zur Durchbiegung der beiden Stirnseiten. Inmitten der Führungsstangen und parallel hierzu wird zwischen den beiden Stirnseiten ein Rohr eingespannt, das die Durch-biegung und die Biegespannung der Stirnseiten begrenzt und das Gehäuse der Schlitteneinheit durchgehend hohl macht.

Der Schlitten ist vorzugsweise aus einem Aluminiumprofil mit einer längs seiner Bewegungsrichtung profilierten Außenfläche und mehreren durchgehend hohlen Bohrungen gestaltet. Die profilierte Außenfläche dient der Aufnahme von Greiferfingern und anderen Trägern oder Mechanismen, die einen Greiferfinger führen. Der Schlitten besitzt eine große zentrale Bohrung und viele kleinere Bohrungen parallel und vorzugsweise konzentrisch zur zentralen Bohrung, die rundum geschlossen oder nicht ganz geschlossen sein können. Er gleitet auf mehreren dicht nebeneinander, vorzugsweise zylinderförmig, angeordneten und vorgespannten Führungsstangen, die durch seine Bohrungen hindurch gehen. Die zentrale Bohrung dient der Gewichtsreduzierung und der Aufnahme eines pneumatischen, hydraulischen oder elektromotorischen Antriebes oder zur Durchführung eines Rohres zur Vorspannung der Führungsstangen sowie zur Begrenzung der Biegespannung der Stirnseiten des Rahmens. Die kleineren Bohrungen dienen der beidseitigen Lagerung des Schlittens auf den Führungsstangen, der Aufnahme oder Durchführung von Antriebs- und Synchronisationselementen wie z.B. Band, Seil, Kette, Riemen, Zahnstange sowie der Unterbringung oder Befestigung von Federn, Stoßdämpfern, Gasdruckfedern, Anschlagstiften, Klemm- und Stoppgliedern, magnetischer, inkrementeller oder optischer Wegmess- und Positionserkennungssystemen sowie der Durchführung von Druckmitteln, Luft oder Öl, zum pneumatischen oder hydraulischen Antrieb.

Bei einem pneumatischen oder hydraulischen Antrieb ist die zentrale Bohrung als Zylinder einer Zylinder-Kolben-Einheit gestaltet, bei der der Kolben durch die Kolbenstange ein- oder beidseitig mit einer oder beiden Stirnseiten des Gehäuserahmens fest verbunden ist und der Zylinder sich als Schlitten auf den Führungsstangen verdrehgesichert translatorisch bewegt. Die Kolbenstange ist vorzugsweise durchgehend und als ein Kolbenrohr hohl gestaltet, um einerseits Material und Gewicht zu sparen, andererseits die Mitte des Greifers für andere Aufgaben wie z.B. Saugen, Blasen, Greifen, Drucken, Rauswerfen, Lasern oder Messen frei zu halten. Der Kolben ist in diesem Fall als ein Kolbenring gestaltet, gegenüber dem Kolbenrohr durch einen O-Ring abgedichtet und beidseitig durch Sicherungsringe axial gesichert. Das Kolbenrohr kann auch aus zwei Teilen bestehen, die den Kolbenring durch einen Absatz formschlüssig in ihrer Mitte einklemmen. Das Kolbenrohr ist beidseitig zwischen den Stirnseiten des Gehäuserahmens durch entsprechende Absätze geführt, geklemmt und durch die Führungsstangen auf Druck vorgespannt. Dadurch sind die Führungsstangen selbst auf Zug vorgespannt und leisten gegen die Kraft und das Moment des Schlittens einen größeren Widerstand gegen Biegung. Die Wahl unterschiedlicher Kolbenrohrdurchmesser erlaubt die Erzeugung unterschiedlicher Kolbenflächen mit unterschiedlicher Greifkraft bei gleichem Druck und Zylinderdurchmesser.

Die Lagerung des Schlittens auf den Führungsstangen erfolgt durch die Anbringung von linearen Gleit- oder Wälzlagern, wie z.B. Kugelumlaufbuchsen, am Anfang, in der Mitte und am Ende der Bohrungen des Schlittens. Dadurch wird verhindert, dass sich die Führungsstangen innerhalb des Schlittens durch die Last des Greifobjektes biegen. Die Führungsstangen des Schlittens werden beidseitig in die Stirnseiten des Gehäuserahmens eingelassen, zentriert und geführt. Sie werden in die innere flanschseitige Stirnseite geführt und fest eingeschraubt. In die nach außen gewandte äußere Stirnseite werden die Führungsstangen mit axialem Spiel eingelassen, seitlich geführt und mittels Schrauben gegen die Stirnseite angezogen und somit auf Zugspannung vorbelastet. Somit können sich die Führungsstangen auch zwischen den Stirnseiten und dem Schlitten unter der Last des Greifobjekts nicht wie ein Balken einfach durchbiegen oder wie eine Welle verdrehen.

Ein derart konzipiertes Fingermodul eines Greifmechanismus ist statisch mehrfach überbestimmt und besitzt durch die vorgespannten Führungsstangen und in sich formschlüssig greifende und ebenfalls vorgespannte Seitenwände die maximale Biegesteifigkeit in jeder der drei räumlichen Ebenen und die maximale Torsionssteifigkeit um jede der drei räumlichen Achsen mit einem Minimum an Material und Eigengewicht, was der Tragfähigkeit des Roboters zugutekommt.

Mindestens zwei Führungsstangen laufen in geschlossenen Bohrungen, die beidseitig mit Stangendichtungen nach außen abgedichtet und mit einem Schmutzabstreifer versehen sind. Diese Stangen sind axial durchgehend hohl und besitzen in etwa der Mitte mindestens eine Querbohrung nach außen. Die axiale und die Querbohrung der Stangen führen das Druckmedium von der inneren, d.h. flanschseitigen, Stirnseite der Schlitteneinheit über die abgedichteten kleineren Bohrungen des Schlittens durch eine Verbindungsbohrung zum großen Zylinderraum. Der feststehende Kolben trennt den Zylinderraum in zwei Arbeitskammern. Diese Arbeitskammern werden nach außen jeweils durch einen ringförmigen Zylinderdeckel mit einer statischen Dichtung gegenüber dem Schlitten und mit einer dynamischen Dichtung und einem Schmutzabstreifer gegenüber dem Kolbenrohr abgedichtet und mit einem Sicherungsring gegenüber dem Schlitten gesichert. Der Kolben steht fest, somit wird der Zylinderdeckel und mit ihm der Schlitten durch das Druckmedium in Bewegung gesetzt.

Von den Druckmittel führenden Bohrungen des Schlittens oder von den beiden Arbeitskammern der Zylinder-Kolben-Einheit, beispielsweise direkt hinter den Zylinderdeckeln, geht jeweils eine Querbohrung nach außen zur profilierten Fläche des Schlittens und dient als schlauchlose Energiequelle zur Erzeugung einer weiteren rotatorischen oder translatorischen Bewegung des Fingers, der auf dem Schlitten befestigt ist. Diese Zusatzbewegung kann automatisch mit der Bewegung des Schlittens gekoppelt werden oder durch ein separates Ventil angesteuert werden.

Die innere, d.h. flanschseitige, Stirnseite der Schlitteneinheit besitzt oberhalb und unterhalb des Gehäuserahmens überstehende Laschen, die formschlüssig in den Greiferflansch und in die über dem Flansch liegende Frontplatte eingreifen. Bei der Anordnung mehrerer Schlitteneinheiten um den Flansch zu einem Multifinger-Greifmechanismus bilden die inneren Stirnseiten der Schlitteneinheiten gemeinsam mit der Flansch- und Frontplatte einen geschlossenen und sehr stabilen Flanschkasten. Die Frontplatte wird durch Zuganker gegen die Flanschplatte angezogen. Beide Platten spannen die Stirnseiten der Fingermodule zwischen sich.

In der Mitte zwischen der Front- und Flanschplatte stabilisiert zusätzlich ein Rohr den Flanschkasten, indem das Rohr beidseitig mit Absätzen in die Front- und Flanschplatte greift und die Durchbiegung der in der Regel dünneren Frontplatte begrenzt. Somit bleibt auch die Mitte des Flanschkastens für andere Aufgaben frei und der Flanschkasten erhält eine hohe Biege- und Torsionssteifigkeit wie das Gehäuse der Fingermodule. Die Zuganker zwischen der Front- und Flanschplatte dienen teilweise auch zur Durchführung und Verteilung des Druckmediums vom Greiferflansch zu den einzelnen Schlitteneinheiten bzw. Fingermodulen. Sie dienen auch teilweise der Führung und der Umlenkung des Antriebs- und Synchronisationselementes.

Bei Bedarf werden die Bewegungen der Schlitten mit Hilfe eines Zugmittels als Synchronisationselement, Seil, Kunststoff- oder Stahlband, Flach-, Keil- oder Zahnriemen, vorzugsweise jedoch mit einer Kette miteinander synchronisiert. Das Zugmittel bzw. das Synchronisationselement läuft von der inneren Stirnseite der Schlitteneinheit durch eine Bohrung des Schlittens hindurch und wird mit Hilfe eines Befestigungselementes mit dem Schlitten befestigt. Von dort läuft das Synchronisationselement durch einen Spann- und Justierring in der äußeren Stirnseite der Schlitteneinheit, wird durch ein Umlenk- und Führungsteil um 180° umgelenkt und läuft erneut durch einen zweiten Spann- und Justierring und durch eine weitere Bohrung des Schlittens zurück zur inneren Stirnseite, von wo aus es innerhalb des Flanschkastens zur nächsten Schlitteneinheit geführt und umgelenkt wird. Der Anfang und das Ende des Antriebs- und Synchronisationselementes werden nach Durchlaufen aller Schlitteneinheiten zusammengeführt und mit einem Befestigungselement vorzugsweise in der Bohrung eines Schlittens miteinander und mit dem Schlitten befestigt. Das Synchronisationselement durchläuft jeden Schlitten zweimal. Je nach Befestigungsseite des Schlittens mit dem Synchronisationselement wird die Bewegungsrichtung des Schlittens und des an ihm befestigten Greiferfingers bestimmt. Somit ist es möglich, bei einem Multifinger-Greifmechanismus mit synchronisierter Fingerbewegung einige Finger zu öffnen, während gleichzeitig andere Finger sich schließen. Ein besonders interessanter Greifmechanismus ergibt sich, wenn einige Greiferfinger mit synchronisierter Fingerbewegung ein labiles oder ein aufgewickeltes Teil, wie z. B. ein Blechcoil, von außen greifen und andere Greiferfinger mit eigenem Antrieb zeitlich verzögert dasselbe Teil von innen greifen.

Bei dem erfindungsgemäßen Fingermodul mit einem elektromotorischen Antrieb gibt es zwei Varianten, bei denen sich der Stator und der Rotor beide im großen Hohlraum des Schlittens befinden und den Schlitten durch einen Spindeltrieb in Bewegung setzen. Bei der ersten Variante ist der Stator mit dem Gehäuse der Schlitteneinheit, vorzugsweise mit der inneren Stirnseite, verbunden. Der Rotor dreht die Spindelwelle, die vorzugsweise in den Stirnseiten der Schlitteneinheit beidseitig rotatorisch gelagert ist und bewegt die Mutter des Spindeltriebes, die mit dem Schlitten verbunden ist und bewegt somit den Schlitten hin und her.

Bei der zweiten Variante des elektromotorischen Antriebes befindet sich in der großen Bohrung des Schlittens ein Hohlläufermotor, dessen Stator mit dem Schlitten verbunden ist und dessen Rotor hohl gestaltet ist und die Mutter des Spindeltriebes umhüllt. Bei dieser Anordnung ist die Spindelwelle zwischen den Stirnseiten der Schlitteneinheit fest eingespannt. Durch die Drehung des Rotors wandert die Mutter und mit ihr der gesamte Motor mit dem Schlitten hin und her.

Vorteilhafterweise wird ein Getriebemotor im Flanschkasten untergebracht, der mit einem Planetengetriebe einen innen und außen verzahnten Ring als Hohlrad antreibt, der seinerseits mit dem Synchronisationselement beispielsweise an seinen Umlenkstellen im Flanschkasten im Eingriff steht und damit alle Schlitten der Schlitteneinheiten synchron antreibt.

Bei der Schlitteneinheit mit einem Spindeltrieb ohne Motor wird die Spindelwelle vorzugsweise durch die innere Stirnseite der Schlitteneinheit hinaus geführt und außerhalb der Schlitteneinheit mit einem Zahnrad, vorzugsweise einem Kegelrad, verbunden. Bei einem elektromotorisch angetriebenen Multifinger-Greifmechanismus sitzt im Flanschkasten ein Getriebemotor mit einem großen Kegelrad, das die Kegelräder aller Fingermodule gemeinsam synchron antreibt. Der enorme Vorteil dieses Greifmechanismus liegt darin, dass der schwere Getriebemotor als gemeinsamer Antrieb aller Fingermodule im Flanschkasten und somit direkt am Flansch des Roboters sitzt, während die Fingermodule ohne Antrieb durchgehend hohl und somit sehr leicht und dennoch sehr torsions- und biegesteif sind.

Mit einem derart kreierten Fingermodul lässt sich ein modulares und vielseitiges Greifersystem mit unterschiedlicher Antriebstechnik, Fingerzahl, Fingergeometrie, Fingeranordnung und Fingerweite zusammenstellen.

Für einen Greifmechanismus mit zwei und mehr beweglichen Greiferfingern wird entsprechende Zahl von Fingermodulen in beliebiger Anordnung miteinander oder mit einem Flanschkasten befestigt.

Im Einzelnen zeigen:
- Fig. 1: ein erfindungsgemäßes Fingermodul mit einer Schlitteneinheit bestehend aus einem Gehäuse, einem Schlitten und einer Kette als Antriebs- oder Synchronisationselement. Am Gehäuse des Fingermoduls sind rechts und links je eine Signalgeberschiene mit einem Signalgeber befestigt.
- Fig. 2: eine Explosionsdarstellung des Gehäuses der Schlitteneinheit.
- Fig. 3: den Schlitten der Schlitteneinheit.
- Fig. 4: einen Schnitt durch den Schlitten der Schlitteneinheit. Der Schnitt geht durch eine Druckmittel führende Stange, eine Führungsstange und durch die zentrale Bohrung des Schlittens, die als Zylinder für eine im Schlitten eingebaute Zylinder-Kolben-Einheit als Betätigungseinheit des Fingermoduls ausgebildet ist. Dabei dient das Spannrohr als Kolbenrohr der Betätigungseinheit.
- Fig. 5: einen Schnitt durch das zweiteilige Kolbenrohr, das den Kolbenring mit einem Absatz in der Mitte zwischen seinen beiden Hälften einspannt.
- Fig. 6: einen Schnitt durch eine Druckmittel betätigte Schlitteneinheit, bei der ein Flachband als Synchronisations- oder Betätigungsmittel durch die innere Stirnseite in eine Bohrung des Schlittens hindurch läuft, dort mit dem Schlitten befestigt wird und anschließend an der äußeren Stirnseite um 180° umgelenkt und zurückgeführt wird.
- Fig. 7: einen Schnitt durch eine Druckmittel betätigte Schlitteneinheit, bei der eine Kette als Synchronisations- oder Betätigungsmittel durch die innere Stirnseite in eine Bohrung des Schlittens hindurch läuft, dort mit dem Schlitten befestigt wird und anschließend an der äußeren Stirnseite um 180° umgelenkt und zurückgeführt wird.
- Fig. 8: eine Explosionsdarstellung der äußeren Stirnseite des Gehäuserahmens mit zwei Spann- und Justierringen, einer Synchronisations- und Antriebskette und einem Umlenk- und Führungsteil.
- Fig. 9: eine Explosionsdarstellung der äußeren Stirnseite des Gehäuserahmens mit zwei hohlen Spann- und Justierringen, einem Zahnriemen als Synchronisations- und Antriebsglied und zwei Einsatzscheiben mit Umlenkrollen.
- Fig. 10: einen Schnitt durch eine Bohrung des Schlittens, in der die Kolbenstange einer Gasdruckfeder befestigt ist und den Schlitten mit ihrem Zylinderkörper gegen die äußere Stirnseite der Schlitteneinheit nach links druckt.
- Fig. 11: einen Schnitt durch eine Bohrung des Schlittens, in der ein Bolzen als Anschlag für einen Stoßdämpfer befestigt ist. Der Stoßdämpfer ist mit der äußeren Stirnseite der Schlitteneinheit befestigt.
- Fig. 12: einen Querschnitt durch eine Schlitteneinheit mit einem in der zentralen Bohrung integriertem Elektromotor und Spindeltrieb. Der Elektromotor ist mit seiner drehbaren Spindelwelle axial zwischen den Stirnseiten der Schlitteneinheit eingespannt. Die Spindelmutter des Spindeltriebes ist axial- und verdrehgesichert in der zentralen Bohrung des Schlittens befestigt.
- Fig. 13: einen Querschnitt durch eine Schlitteneinheit mit einem in der zentralen Bohrung des Schlittens integrierten Elektromotor mit einem hohlen Rotor, der die Spindelmutter eines Spindeltriebes beinhaltet. Die Spindelwelle des Spindeltriebes ist beidseitig zwischen den Stirnseiten der Schlitteneinheit fest eingespannt.
- Fig. 14: einen Querschnitt durch eine Schlitteneinheit mit einem in der zentralen Bohrung der Schlitteneinheit integrierten Spindeltrieb, bestehend aus einer Spindelwelle und einer Spindelmutter, bei dem die Spindelmutter mit dem Schlitten befestigt ist und die Spindelwelle zwischen den beiden Stirnseiten der Schlitteneinheit drehbar eingespannt und außerhalb der inneren Stirnseite der Schlitteneinheit mit einem Zahnrad verbunden ist.
- Fig. 15: eine Explosionsdarstellung eines Sechsfinger-Greifmechanismus. Die Stirnseiten der einzelnen Fingermodule ragen formschlüssig in zwei Platten, die Flansch- und die Frontplatte, ein. Diese beiden Platten werden durch Zuganker zusammengezogen und miteinander zu einem Flanschkasten verschraubt. Ein Rohr im Zentrum der beiden Platten hält die Flansch- und Frontplatte formschlüssig auf Abstand.
- Fig. 16: eine Draufsicht auf einen Greifmechanismus mit zwei Fingermodulen, bei dem die inneren Stirnseiten der Schlitteneinheiten zu einer gemeinsamen Platte zusammengefügt sind. Eine Teilansicht zeigt, wie das Druckmedium über einen Anschluss und einer Bohrung von außen zu den beiden Fingermodulen gelangt.
- Fig. 17: einen Greifmechanismus mit zwei Fingermodulen in Drauf- und Seitenansicht. Die inneren Stirnseiten sind formschlüssig in die Flanschplatte und in die Frontplatte eingesetzt und mit Hilfe von Zugankern zu einem geschlossenen Flanschkasten zusammengesetzt. Ein Elektromotor sitzt im Flanschkasten und treibt mit Hilfe eines Kettenrades die Antriebs- und Synchronisationskette der beiden Fingermodule an.
- Fig. 18: einen Dreifinger-Greifmechanismus mit einem im Flanschkasten untergebrachten Elektromotor mit einem Planetengetriebe als Antrieb in Draufsicht und in einem Schnitt. Das Hohlrad des Planetengetriebes ist mit einem Kettenrad verbunden, das mit der einzigen endlos geschlossenen Synchronisations- und Betätigungskette, vorzugsweise an ihren Umlenkstellen, im Eingriff steht und antreibt.
- Fig. 19: einen pneumatisch betätigten Vierfinger-Greifmechanismus für flache Teile, Rohre und Wellen mit der Darstellung der pneumatischen Schläuche von den beiden Versorgungsleisten für Druckluft zu den einzelnen Fingermodulen.
- Fig. 20: einen elektromotorisch angetriebenen zentrischen VierfingerGreifmechanismus. Der im Flanschkasten untergebrachte Elektromotor treibt mit Hilfe eines Planetengetriebes ein Hohlrad an. Das Hohlrad ist mit einem Kettenrad verbunden, das an mindestens vier Stellen mit der Antriebs- und Synchronisationskette der Fingermodule im Eingriff steht und diese antreibt.
- Fig. 21: einen zentrischen Dreifinger-Greifmechanismus mit einem Elektromotor und einem Kegelradgetriebe als Betätigungseinheit für alle drei Fingermodule. Die einzelnen Fingermodule besitzen je einen Spindeltrieb als Betätigungseinheit mit einem Kegelrad am flanschseitigen Ende der Spindelwelle.
- Fig. 22: ein Fingermodul mit einem aktiv schwenkbaren Greiferfinger auf seinem Schlitten.
- Fig. 23: ein pneumatisch betätigtes Fingermodul mit einem als Koppel eines Führungsgetriebes geführter Greiferfinger auf dem Schlitten des Fingermoduls.

Identische Teile haben die gleiche Ziffer. Indizes mit Buchstaben kennzeichnen verschiedene Bereiche, unterschiedliche Ausführungen oder mehrfache Anordnung desselben Elementes.

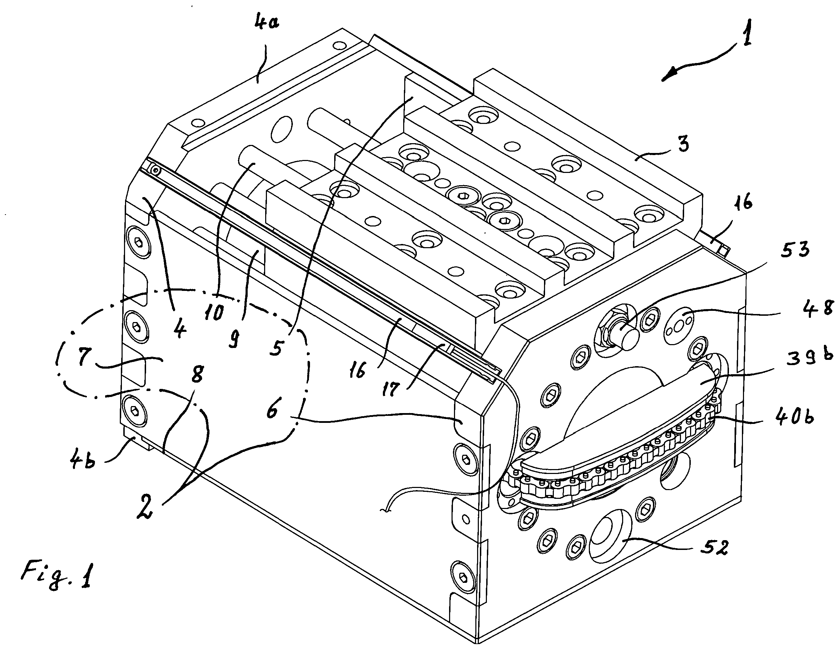

Gemäß Fig. 1 besteht das Fingermodul (1) aus einer Schlitteneinheit (2, 3) und einem Antriebs- oder Synchronisationselement (40b), das zweimal den Schlitten (3) durchläuft und einseitig mit dem Schlitten verbunden ist. Das Gehäuse (2) der Schlitteneinheit besteht aus einem vier- bis fünfteilig ineinander verschachtelten und verschraubten Rahmen (4, 5, 6, 7, 8), dessen Stirnseiten (4, 6) durch mehrere zu den Seitenwänden und zum Boden parallel verlaufende Zugstangen (10) derart zusammengedrückt werden, dass die Stangen selbst auf Zug und die Stirnseiten auf Biegung vorgespannt werden. Ein Rohr (9) oder eine Stange platziert zwischen den beiden Stirnseiten und inmitten der Zugstangen (10) begrenzt die Durchbiegung der Stirnseiten. Die innere Stirnseite des Gehäuserahmens (4) besitzt über die Seitenwände hinausragende Laschen (4a, 4b) zur Befestigung an einem Flanschkasten oder an einem anderen Fingermodul. Der Schlitten (3) dient der Aufnahme eines Greiferfingers. Am Gehäuserahmen (2) ist beidseitig je eine Signalgeberschiene (16) befestigt, die der Aufnahme von Signalgebern (17) dienen. Zur Erkennung der Position des Schlittens befindet sich beidseitig des Schlittens unterhalb der Signalgeberschiene je eine Nut, in der Permanentmagnete befestigt sind. Die Permanentmagnete bewegen sich mit dem Schlitten unterhalb der feststehenden Signalgeberschiene (17). Sie aktivieren die magnetischen Signalgeber (17), sobald sie sich ihnen nähern.

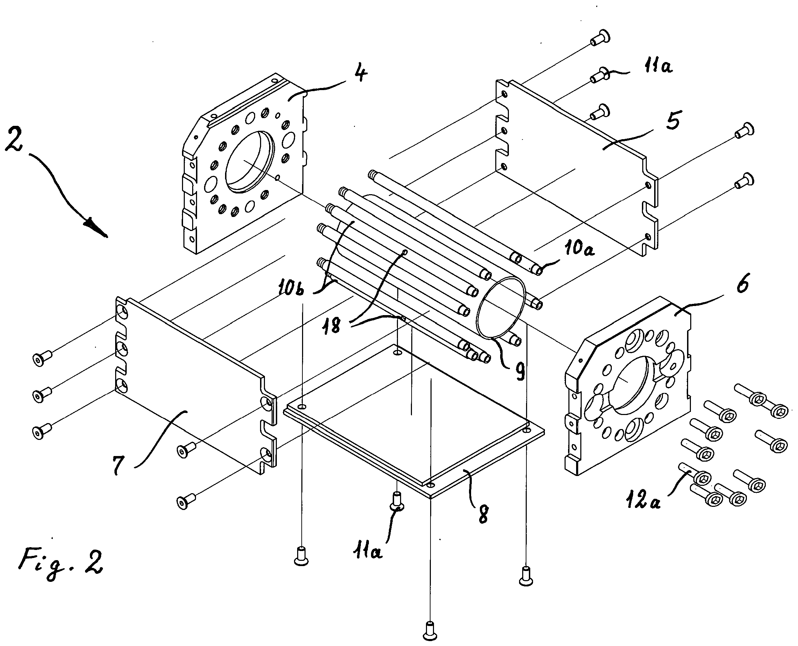

Gemäß Fig. 2 besteht das Gehäuse (2) der Schlitteneinheit aus einem Rahmen (4, 5, 6, 7), einem zentralen Rohr (9) und mehreren um das zentrale Rohr, vorzugsweise koaxial wie ein in Längsrichtung geschlitztes Rohr, platzierten Stangen (10a, 10b). Der Rahmen besteht aus mindestens vier Seiten (4, 5, 6, 7), die formschlüssig ineinander verschachtelt und durch die Senkschrauben (11a) miteinander verschraubt sind. Optional besitzt der Rahmen einen Boden (8), der entweder ganz oder durch einen Absatz nur teilweise in den Rahmen hineinragt und verhindert, dass sich der rechtwinklige Rahmen durch die Last des Greifobjektes aus der Form bringt.

Zwischen den beiden Stirnseiten (4, 6) sind mehrere Stangen (10a, 10b) und ein zentrales Rohr (9) platziert. Die Stirnseiten besitzen in der Mitte je eine zentrale Bohrung mit einem Absatz nach innen zur Aufnahme und zum Einspannen des Rohres (9) und mehrere weitere Bohrungen zur Aufnahme der Stangen (10a, 10b) und zur Aufnahme oder Durchführung anderer Maschinenelemente wie zum Beispiel Feder, Stoßdämpfer, Zug und Druckmittel, Antriebs- und Synchronisationselementen, Sensoren, optische oder magnetische Sender und Empfänger.

Die Stangen (10a, 10b) haben beidseitig je einen passgenauen Absatz. Sie besitzen vorzugsweise auf der einen Seite ein Außengewinde und auf der anderen Seite ein Innengewinde. Einige der Stangen (10a) dienen als Führungsstangen zur Aufnahme und exakten Führung des Schlittens (3). Sie sind mit ihrem Außengewinde, Absatz und einen Teil ihrer Außenmantelfläche in die passgenauen Bohrungen mit Absatz und Innengewinde der Stirnseite (4) eingeführt und in ihr fest eingeschraubt. Auf der anderen Seite sind die Führungsstangen ebenfalls mit ihrer Außenmantelfläche und ihrem Absatz in die passgenauen Bohrungen der äußeren Stirnseite (6) axial beweglich eingeführt und mit ihrem Innengewinde durch die Zylinderkopfschrauben (12a) gegen die äußere Stirnseite (6) mit einem definierten Drehmoment angezogen. Somit sind die Führungsstangen beidseitig in den Stirnseiten (4, 6) spielfrei geführt und mit Zugspannung gehalten:
Die Führungsstangen (10a, 10b) spannen die Stirnseiten (4, 6) des Rahmens gegen die Seitenwände (5, 7) und wenn vorhanden auch gegen den Boden (8) des Gehäuses (2). Dabei biegen sich die Stirnseiten (4, 6) soweit durch, bis das Rohr (9), dessen Länge exakt berechnet ist, fest eingespannt ist. Hierdurch werden die Führungs-stangen auf Zug und alle anderen Teile des Gehäuses (2) auf Druck vorgespannt.

Das Rohr (9) kann auch durch eine volle Stange oder eine Gewindestange oder eine Spindelwelle ersetzt werden.

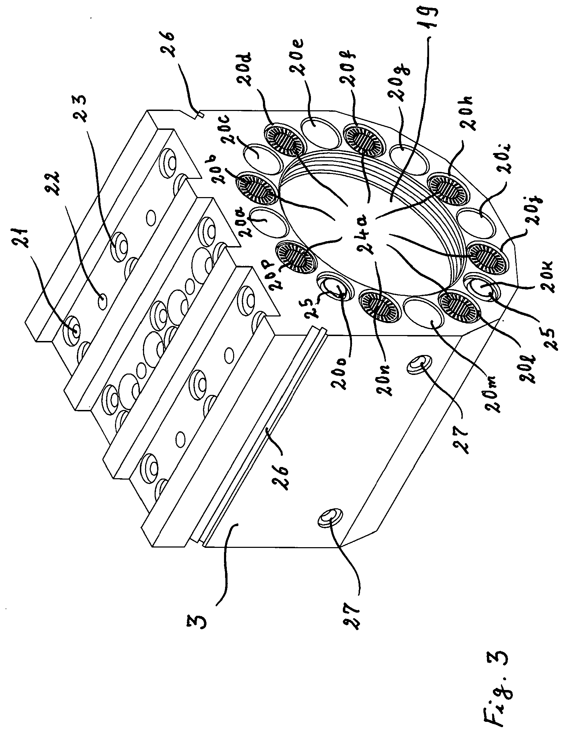

Gemäß Fig. 3 besitzt der Schlitten (3) eine größere zentrale Bohrung (19) und mehrere kleinere Bohrungen (20a bis 20p), die parallel zur zentralen Bohrung (19) verlaufen und vorzugsweise zylinderförmig und koaxial dazu angeordnet sind. Die zentrale Bohrung (19) dient der Gewichtseinsparung und der Unterbringung von Antrieben jeder Art und anderen Maschinenelementen. In einigen der kleineren Bohrungen (20b, 20d, 20f, 20h, 20j, 20l, 20n, 20p) sind bis zu drei, am Anfang, am Ende und in der Mitte der Bohrungen, lineare Gleitlager (24a, 24b) oder lineare Wälzlager bzw. Kugelbuchsen eingepresst. Sie dienen der Aufnahme und der reibungsarmen Führung der Führungsstangen (10a), auf denen der Schlitten gleitet. Dadurch können sich die Führungsstangen durch die Last des Greifobjektes auch innerhalb der Bohrungen des Schlittens nicht durchbiegen. Die zylinderförmige Anordnung der Führungsstangen gemeinsam mit deren mehrfachen Lagerung und Führung in den Stirnseiten (4, 6) und im Schlitten (3) verleihen gemeinsam mit ihrer Vorspannung dem Fingermodul (1) die maximale Biegesteifigkeit in jeder Raumebene und die maximale Torsionssteifigkeit in Bezug auf jede Achse des Raumes mit einem Minimum an Material und Gewicht.

Der Schlitten (3) besitzt auf mindestens einer Seite eine in Längsrichtung parallel zur Achse der zentralen Bohrung (19) profilierte Fläche, die mit ihren Gewindebohrungen (21), Zentrierbohrungen (22) und Zentriersenkungen (23) der Aufnahme von Greiferfingern und anderen den Greiferfinger haltenden oder führenden Teilen dient.

Bei Fingermodulen mit einem integrierten pneumatischen oder hydraulischen Antrieb besitzen zwei der kleineren Bohrungen (20k, 20o) beidseitig je eine Stangendichtung mit Abstreifer (25). Die Führungsstangen (10b) gehen durch diese abgedichteten Bohrungen hindurch und besitzen je eine axiale Bohrung und in der Mitte eine Querbohrung (18). Die abgedichteten Bohrungen (20k, 20o) des Schlittens (3) besitzen je eine Bohrung als Querverbindung zu je einer Stirnseite der zentralen Bohrung (19).

An mindestens zwei äußeren Seiten des Schlittens (3) sind in Längsrichtung der zentralen Bohrung (19) Nuten (26) angebracht, die der Aufnahme von Permanentmagneten für Signalgeber und andere magnetisch reagierende Sensoren dienen.

Mindestens zwei der kleineren Bohrungen (20e, 20m) dienen der Durchführung von Zugmitteln wie z.B. Flachband aus Kunststoff oder aus Metall, Kette, Riemen, Zahnriemen, Stange, Zahnstange. Das Zugmittel wird in einer der beiden Bohrungen (20e, 20m) des Schlittens durch eine der beiden Querbohrungen (27) mit dem Schlitten (3) befestigt und dient entweder als Antriebs- oder als Synchronisationselement.

Weitere zwei Bohrungen (20a, 20i) des Schlittens (3) dienen der Aufnahme von Anschlagstiften, die bei der Bewegung des Schlittens gegen Stoßdämpfer fahren, die in den Stirnseiten (4, 6) montiert sind. Die Anschlagstifte begrenzen gemeinsam mit den Stoßdämpfern zum einen den Verfahrweg des Schlittens in beiden Richtungen und dämpfen zum anderen jeweils den Endanschlag.

Weitere zwei Bohrungen (20c, 20g) des Schlittens dienen der Befestigung von Enden von Gasdruckfedern, die den Schlitten (3) wahlweise gegen die Stirnseite (4) oder (6) drücken und als Objektsicherung bei Energieausfall dienen.

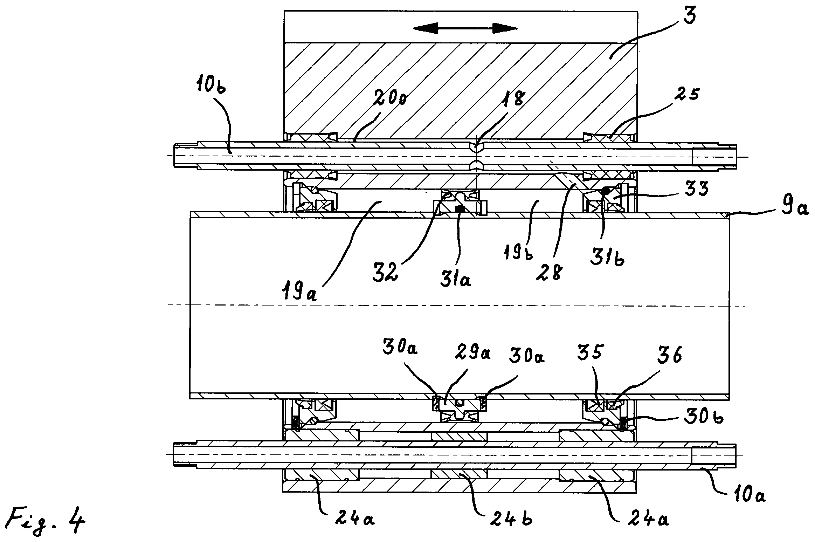

Gemäß Fig. 4 ist die zentrale Bohrung (19) des Schlittens (3) gemeinsam mit dem Spannrohr (9a) als eine Zylinder-Kolben-Einheit ausgebildet. Auf dem Spannrohr (9a) ist der Kolbenring (29a) mittels Sicherungsringe (30a) axial gesichert und mit dem O-Ring (31a) gegen das Spannrohr (9a) abgedichtet. Auf dem Kolbenring (29a) sitzt die Kolbendichtung (32) und teilt den hohlzylinderförmigen Raum zwischen dem Spannrohr (9a) und der zentralen Bohrung (19) des Schlittens in zwei Arbeitskammern (19a, 19b). Diese Arbeitskammern werden Stirnseitig durch die beiden Zylinderdeckel (33) jeweils mit dem O-Ring (31b) gegen die Wandung der zentralen Bohrung (19) und mit der dynamischen Stangendichtung (35) gegen das Spannrohr (9a) abgedichtet. Der Zylinderdeckel (33) besitzt auf dem Spannrohr den Abstreifer (36) und wird durch den Sicherungsring (30b) in der zentralen Bohrung (19) des Schlittens (3) axial gesichert.

Das Druckmedium strömt von einer der beiden Stirnseiten, vorzugsweise von der inneren Stirnseite (4) des Gehäuses durch die hohle Führungsstange (10b) und den beiden Querbohrungen (18, 28) in die Arbeitskammer (19b) der Zylinder-Kolben-Einheit und bewegt den Schlitten nach rechts, da das Kolbenrohr eingespannt ist und sich nicht bewegen kann. Auf analoge Weise gelangt das Druckmittel durch die zweite durchbohrte Führungsstange in der Bohrung (20k) in die Arbeitskammer (19a) und bewegt den Schlitten nach links.

Die Führungsstangen (10a) sind in den Bohrungen des Schlittens (20b, 20d, 20f, 20h, 20j, 20l, 20n, 20p) beidseitig auf linearen Gleit- oder Wälzlagern (24a) und zusätzlich in der Mitte durch das Linearlager (24b) gelagert. Die Druckmittel führende Stangen (10b) sind in ihren Bohrungen (20k, 20o) beidseitig durch die Stangendichtungen (25) abgedichtet.

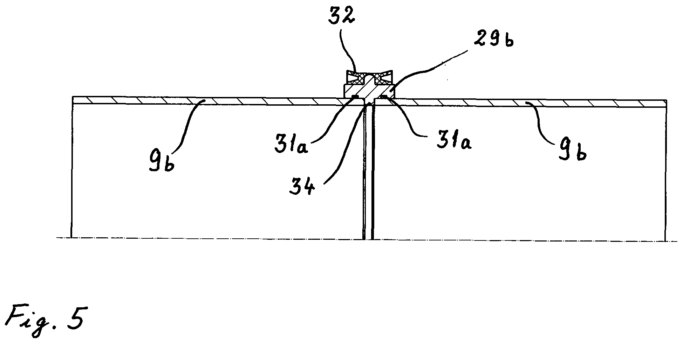

Gemäß Fig. 5 besteht das vorgespannte Kolbenrohr aus zwei gleichen Hälften (9b), die in ihrer Mitte den Kolbenring (29b) an seinem inneren Absatz (34) einspannen.

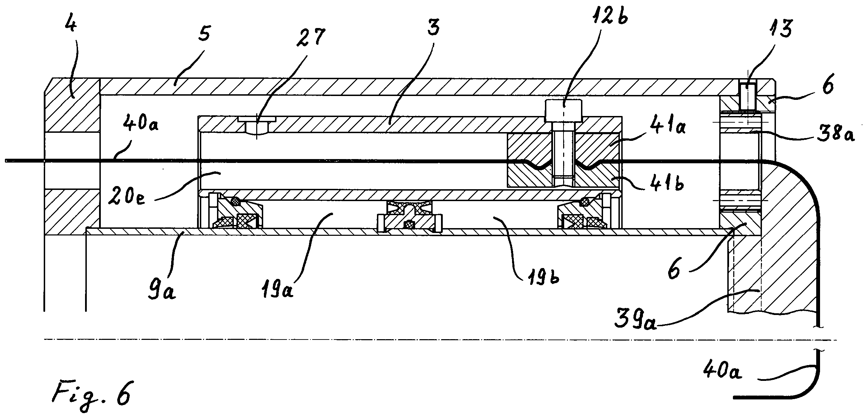

Gemäß Fig. 6 läuft ein Flachband (40a) aus Stahl oder Kunststoff als Synchronisationselement des Schlittens (3) aller Schlitteneinheiten eines Greifmechanismus durch eine Bohrung in der inneren Stirnseite (4) jeder Schlitteneinheit und weiter durch eine Bohrung (20e) des Schlittens (3), wo es mit Hilfe des zweiteilig und wellenförmig gestalteten Befestigungselementes (41a, 41b) und der Zylinderkopfschraube (12b) mit dem Schlitten (3) befestigt wird. Von dort läuft das Flachband (40a) durch den Spann- und Justierring (38a) und über das Umlenk- und Führungsteil (39a), die komplett in der äußeren Stirnseite (6) liegen. Das Flachband (40a) wird durch das Umlenk- und Führungsteil (39a) seitlich geführt, um zweimal 90° umgelenkt und durch eine weitere Bohrung des Schlittens (20m) ohne Befestigung mit ihm zur inneren Stirnseite (4) der Schlitteneinheit zurückgeführt. Beim Fehlen des eigenen Antriebes dient das Flachband (40a) zusätzlich als Antriebsmittel für alle Schlitten (3) eines Greifmechanismus. Das Flachband besteht in der Regel aus nicht rostendem Federstahl. Für einfache und nicht sehr präzise Aufgaben können auch die handelsüblichen Kunststoffbänder als Synchronisationselement verwendet werden, die in der Verpackungsindustrie bei Kartonagen Verwendung finden. Das Umlenk- und Führungsteil (39a) besteht vorzugsweise aus einem Kunststoff mit guter Gleiteigenschaft wie PTFE, POM, Polyamid, S-Grün oder Delrin.

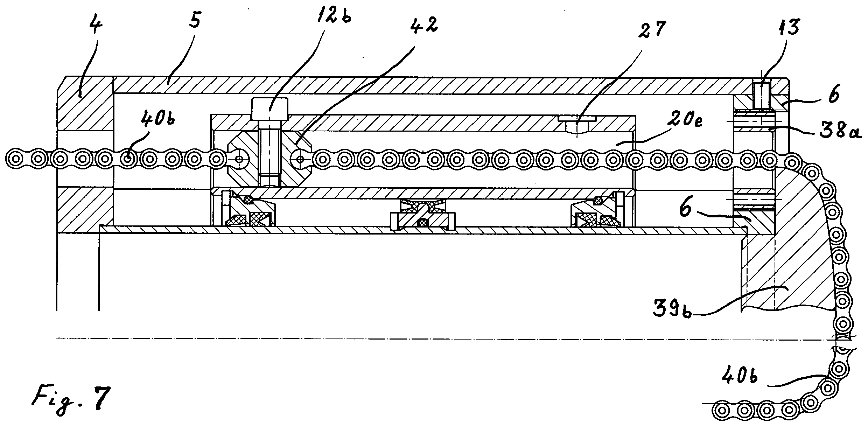

Gemäß Fig. 7 dient eine Kette (40b) als Synchronisationselement aller Schlitten (3) mehrerer Schlitteneinheiten eines Multifinger-Greifmechanismus. Die Kette (40b) durchläuft alle Schlitteneinheiten eines Greifmechanismus endlos durch. Sie wird in jedem Schlitten nur einmal mit Hilfe eines Kettenschlosses (42) mit der Wandung einer der Bohrungen (20e) oder (20m) befestigt. Beim Fehlen des eigenen Antriebes dient die Kette (40b) zusätzlich als Antriebsmittel für alle Schlitten (3) des Greifmechanismus.

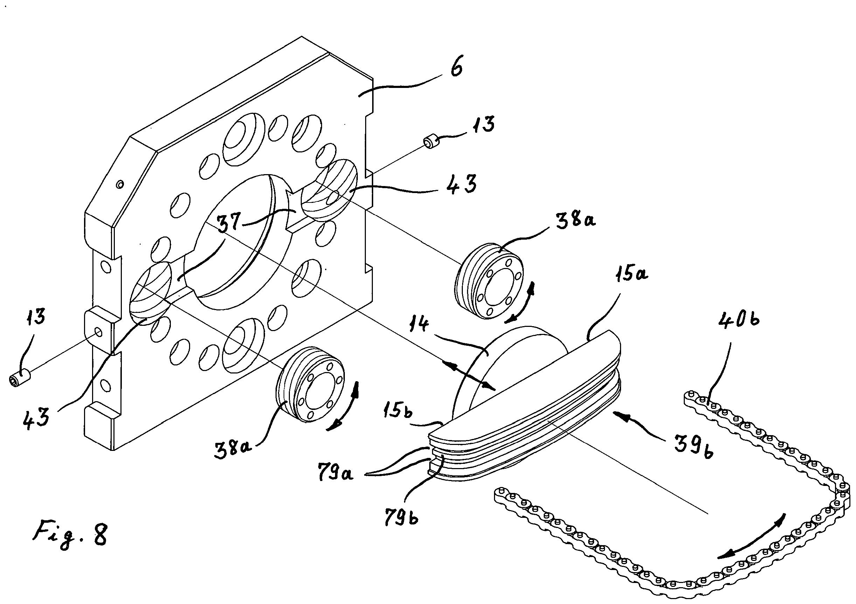

Gemäß Fig. 8 befinden sich in der äußeren Stirnseite (6) des Gehäuserahmens (2) gegenüber den Bohrungen (20e, 20m) des Schlittens je eine Gewindebohrung (43), die der Aufnahme der beiden Spann- und Justierringen (38a) oder (38b) dienen. Die Umlenk- und Führungsteile (39a, 39b) des Bandes (40a) und der Kette (40b) besitzen je einen zylindrischen Teil (14), der in die zentrale Bohrung der äußeren Stirnseite (6) axial beweglich hineinragt und seitlich davon zwei Laschen (15a, 15b) mit drei geraden Seiten und einer vierten Seite als Führungsbahn. Die Laschen (15a, 15b) ragen in die Längsnut bzw. die Ausfräsung (37) zwischen den Gewindebohrungen (43) und der zentralen Bohrung der Stirnseite (6) axial beweglich hinein. Die Nut bzw. die Ausfräsung (37) dient als Verdrehsicherung der Umlenk- und Führungsteile (39a) und (39b). Die seitlichen Laschen (15a, 15b) der Umlenk- und Führungsteile (39a, 39b) ragen soweit in die Gewindebohrungen (43) hinein, dass das Antriebs- und Synchronisationselement (40a, 40b) zentrisch auf der Achse der Gewindebohrungen (43) läuft. Die Führungsbahn des Umlenk- und Führungsteils (39b) besitzt zwecks Umlenkung und der seitlichen Führung der Antriebs- und Synchronisationskette (40b) in der Mitte zwei Nuten (79a) und zwischen den beiden Nuten entlang der Führungsbahn einen Mittelsteg (79b). Die Seitenteile der Kettenglieder ragen in die beiden Nuten (79a) hinein und die Rollkörper der Kettenglieder rollen auf dem Mittelsteg (79b) zwischen den beiden Nuten (79a) ab.

Durch die Drehung der Spann- und Justierringe (38a, 38b) werden die Umlenk- und Führungsteile (39a, 39b) axial verschoben und die Spannung des Antriebs- und Synchronisationselementes (40a, 40b) erhöht oder reduziert. Auch die Feinjustage der Position der Schlitten eines Multifinger-Greifmechanismus relativ zu einander lassen sich über die Spann- und Justierringe regulieren. Mit den Stiftschrauben (13) werden die Spann- und Justierringe (38a, 38b) gegen Verdrehung gesichert.

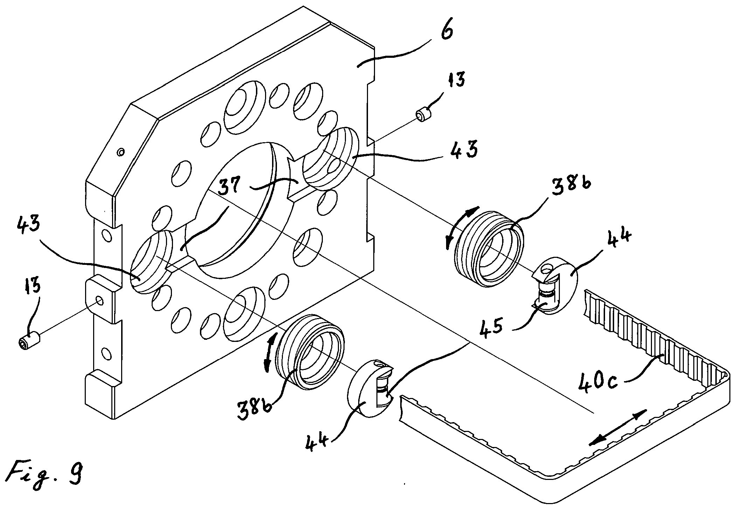

Gemäß Fig. 9 dient ein Zahnriemen (40c) als Antriebs- und Synchronisationselement des Schlittens (3). Der Zahnriemen (40c) wird über die Umlenkrollen (45) geführt und umgelenkt. Die Umlenkrollen (45) sind an der Einsatzscheibe (44) drehbar befestigt und in die Spann- und Justierringe (38b) drehbar eingesetzt.

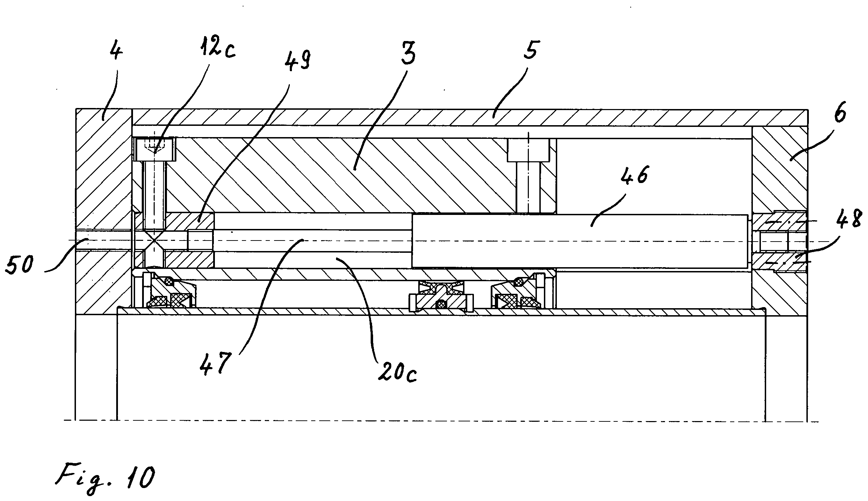

Gemäß Fig. 10 befindet sich in der Bohrung (20c, 20g) des Schlittens (3) eine Gasdruckfeder, deren Zylinderkörper (46) mit Hilfe einer Stellschraube (48) mit der äußeren Stirnseite (6) der Schlitteneinheit verbunden ist. Die Kolbenstange (47) der Gasdruckfeder ist mit einem Bolzen (49) verschraubt, der seinerseits mit Hilfe der Schraube (12c) in der Bohrung (20c) des Schlittens befestigt ist und den Schlitten nach links druckt. Analog hierzu wird die Kolbenstange (47) der Gasdruckfeder in die Gewindebohrung (50) der inneren Stirnseite (4) eingeschraubt und der Zylinderkörper (46) mit der Bohrung (20g, 20c) befestigt, um den Schlitten (3) nach rechts zu drücken. Die Gasdruckfedern oder mechanische Federn dienen als Objektsicherung und halten das Greifobjekt bei Energieausfall.

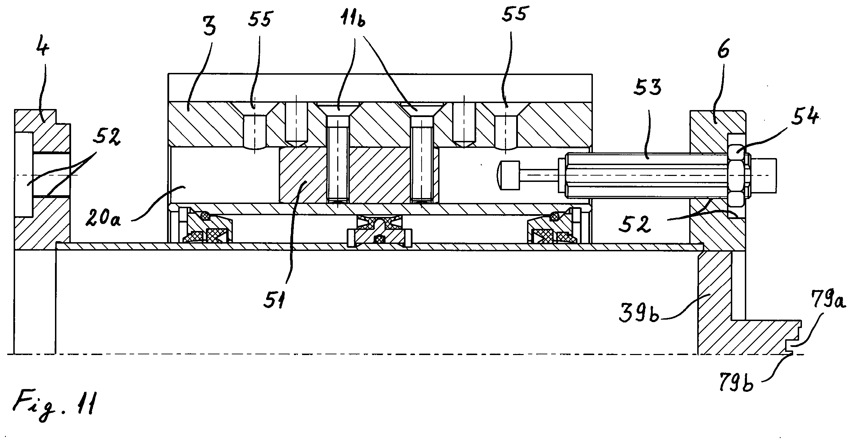

Gemäß Fig. 11 ist der Anschlagbolzen (51) mit Hilfe der Senkschrauben (11b) in der Bohrung (20a, 20i) des Schlittens (3) befestigt. An der inneren und äußeren Stirnseiten (4, 6) der Schlitteneinheit befinden sich gegenüber den Bohrungen (20a, 20i) je eine Gewindebohrung mit einer größeren Senkung (52) zwecks Anbringung und Befestigung von Stoßdämpfern (53) mittels Gewinde und Kontermutter (54). Der Anschlagbolzen (51) besitzt zwei asymmetrische Gewindebohrungen, die es ermöglichen, ihn wahlweise in die eine oder andere Richtung an verschiedenen Stellen der Bohrungen (20a, 20i) zu befestigen, um den Hub des Schlittens je nach Bedarf unterschiedlich und variabel zu begrenzen und den Endanschlag jeweils zu dämpfen. Zur Befestigung des Anschlagbolzens (51) besitzt der Schlitten (3) an seiner Ober- und Unterseite Durchgangsbohrungen (55) für die Schrauben (11b), die bis in die darunter liegenden Bohrungen (20a, 20i) des Schlittens hinein ragen.

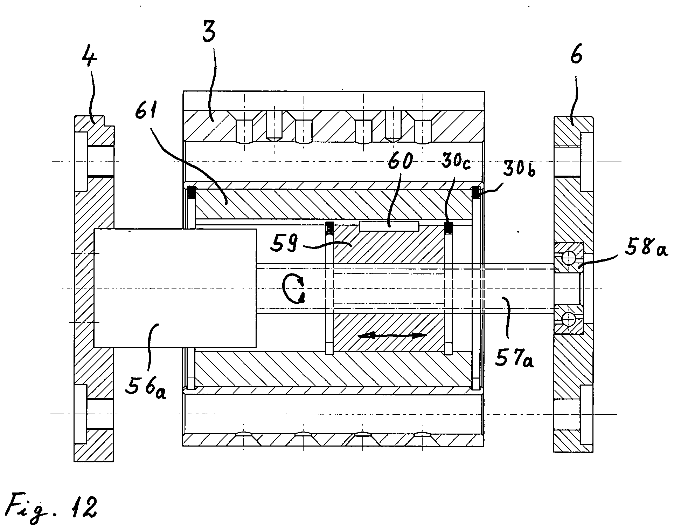

Gemäß Fig. 12 ist ein Elektromotor (56a) und eine Spindelwelle (57a) zwischen den Stirnseiten (4, 6) der Schlitteneinheit eingespannt. Die Spindelwelle (57a) ist auf der einen Seite mit dem Rotor des Elektromotors verbunden und auf der anderen Seite durch das Wälzlager (58a) in der äußeren Stirnseite (6) der Schlitteneinheit drehbar gelagert und durch die Führungsstangen axial eingespannt. Die Spindelmutter (59) sitzt mit Hilfe der Passfeder (60) und den Sicherungsringen (30c) im rohrförmigen Teil (61) fest. Das rohrförmige Teil (61) sitzt als Zwischenstück verdrehgesichert fest im Schlitten (3) und ist diesem gegenüber mit Hilfe der Sicherungsringe (30b) axial gesichert. Die Drehung der Spindelwelle (57a) durch den Elektromotor (56a) bewirkt die axiale Schiebung des Schlittens (3) hin und her.

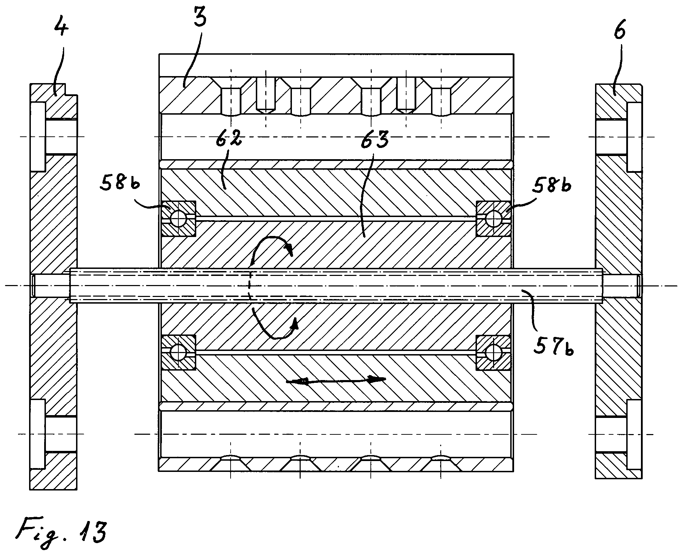

Gemäß Fig. 13 ist der Stator (62) bzw. das Gehäuse eines Elektromotors in der zentralen Bohrung des Schlittens (3) fest integriert. Der Rotor (63) des Elektromotors ist durchgehend hohl und beinhaltet die Mutter des Spindeltriebes (57b, 63), dessen Spindelwelle (57b) zwischen den beiden Stirnseiten (4, 6) der Schlitteneinheit fest eingespannt ist. Wenn sich der Rotor (63) dreht, wandert der Schlitten (3) auf seinen Führungsstangen hin und her.

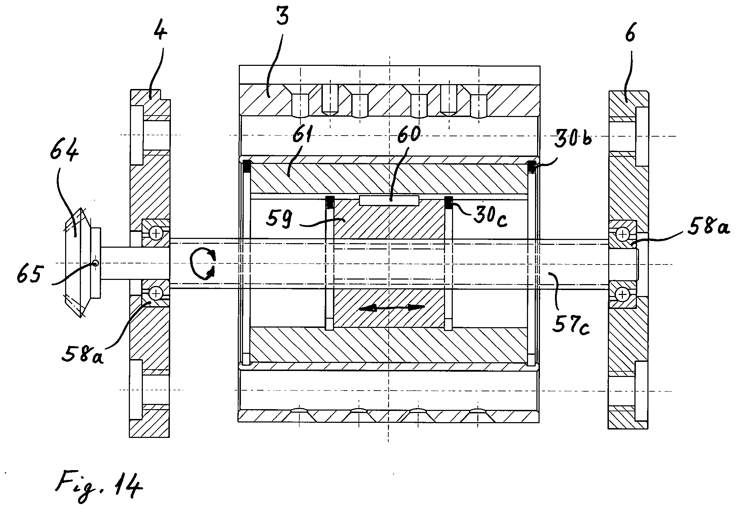

Gemäß Fig. 14 ist die Spindelwelle (57c) eines Spindeltriebes zwischen den beiden Stirnseiten (4, 6) der Schlitteneinheit mit Hilfe der Wälzlager (58a) drehbar gelagert und durch die Führungsstangen auf Druck vorgespannt. An der inneren Stirnseite (4) der Schlitteneinheit ist an der Spindelwelle (57c) ein Zahnrad, vorzugsweise ein Kegelrad (64) mit Hilfe des Stiftes (65) befestigt. Durch die Drehung des Kegelrades (64) bewegt sich die Spindelmutter (59) und mit ihr bewegt sich der Schlitten (3) hin und her. Eine derart konzipierte Schlitteneinheit mit dem Spindeltrieb und Kegelrad stellt ein Fingermodul für einen Multifinger-Greifmechanismus mit einem gemeinsamen Elektromotor als Antrieb dar, der im Flanschkasten des Greifmechanismus sitzt und mit einem einzigen Kegelrad alle Kegelräder (64) der Spindeltriebe synchron antreibt.

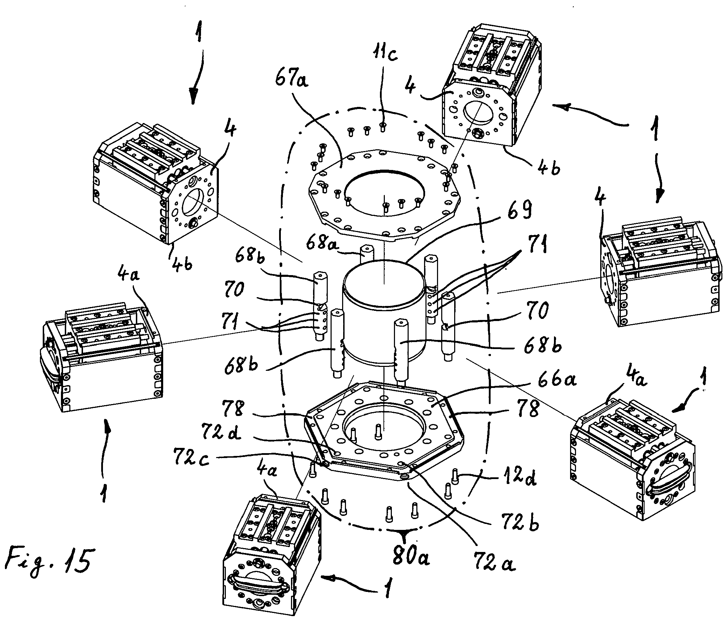

Gemäß Fig. 15 werden sechs Fingermodule (1) mit den oberen und den unteren, überstehenden Laschen (4a, 4b) ihrer inneren Stirnseiten (4) in die korrespondierenden Nuten (78) der Flanschplatte (66a) und der Frontplatte (67a) gesteckt und mit Hilfe der Zuganker (68a, 68b) und den Schrauben (11c, 12d) gegeneinander angezogen und vorgespannt. Die beiden Flansch- und Frontplatten sind in der Mitte hohl und besitzen jeweils einen Absatz, der ein rohrförmiges Teil (69) dazwischen zentriert und einspannt. Das Teil (69) ist in seiner Höhe gegenüber der Höhe der inneren Stirnseiten (4) so toleriert, dass es die Biegespannung der Flansch- und Frontplatte, verursacht durch die Zuganker, begrenzt. Die Flanschplatte (66a) bildet gemeinsam mit den inneren Stirnseiten (4) der Fingermodule (1), der Frontplatte (67a), dem Teil (69) und den Zugankern (68a, 68b) einen geschlossenen und sehr stabilen Flanschkasten (80a).

Sechs Zuganker (68a, 68b) besitzen je eine Führungs- und Umlenknut (70) zur Führung und Umlenkung des Antriebs- und Synchronisationselementes (40a, 40b, 40c) von einem Fingermodul zum nächsten Fingermodul. Einige Zuganker besitzen zusätzlich zur Führungs- und Umlenknut (70) eine axiale Bohrung und mehrere radiale Bohrungen mit Gewindeanschluss (71) und dienen als Versorgungsleiste (68b) und Verteiler des Druckmittels von der Flanschplatte zu den einzelnen Fingermodulen. Die Flanschplatte (66a) besitzt mehrere Bohrungen zur Befestigung des Greifmechanismus an einem Roboter und stirnseitig am Umfang mindestens zwei Gewindeanschlüsse (72a) und (72c), die das Druckmedium für die Bewegung der Fingermodule über die Anschlüsse (72b) und (72d) in die Versorgungsleisten (68b) führen. Die Versorgungsleisten (68b) werden mit ihrem Außengewinde in das Gewinde der Anschlüsse (72b, 72d) der Flanschplatte eingeschraubt und abgedichtet. Sie führen das Druckmedium von den Gewindeanschlüssen (72a, 72c) der Flanschplatte zu den Gewindeanschlüssen (71) innerhalb des Flanschkastens (80a).

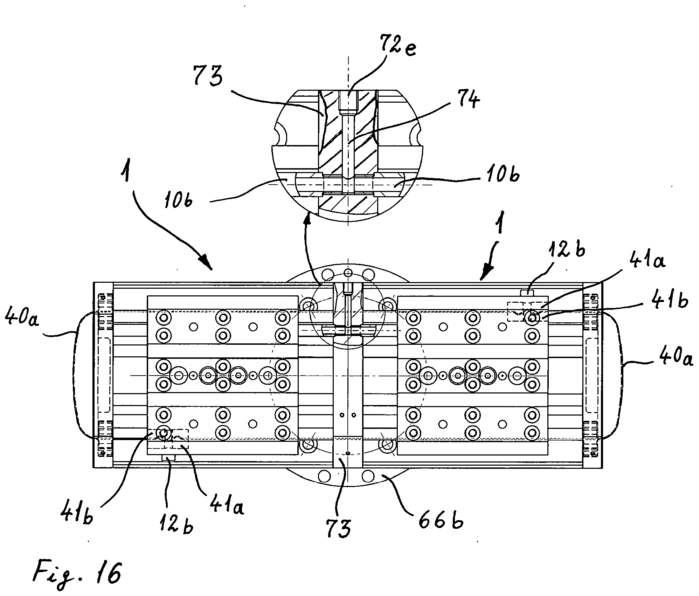

Gemäß Fig. 16 sind die Stirnseiten zweier Fingermodule zu einer einzigen Platte als Mittelsteg (73) zusammengeführt und mit dem Flansch (66b) befestigt. Die Fingermodule besitzen jeweils ihren eigenen pneumatischen oder hydraulischen Antrieb. Die Bohrungen der beiden Druckmittel führenden Führungsstangen (10b) münden in die gemeinsame Bohrung (74) im Mittelsteg und von dort entweder direkt zum Druckmittelanschluss (72e) oder zu einem Anschluss am Flansch. Die Synchronisation der Schlitten erfolgt über das Flachband (40a) mittels Befestigungselemente (41a, 41b) und der Schrauben (12b).

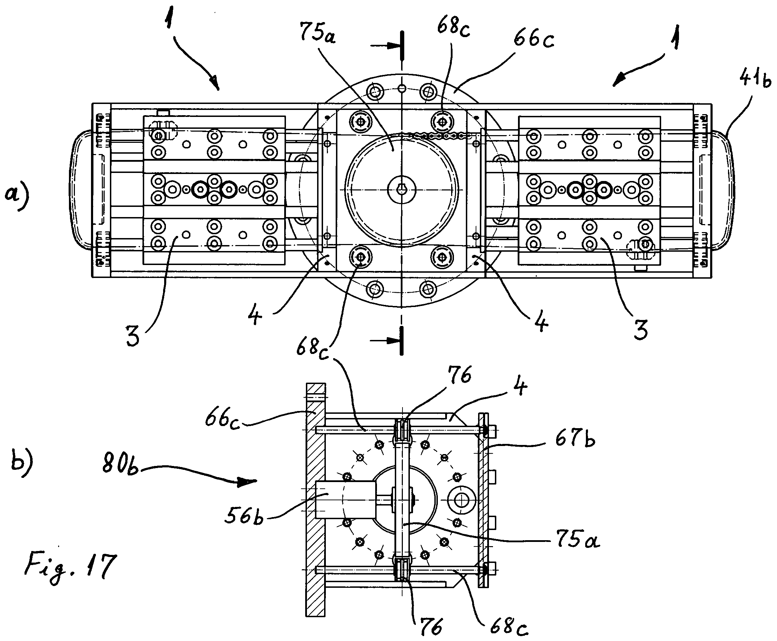

Gemäß Fig. 17 sind die inneren Stirnseiten (4) zweier Fingermodule (1) mit der Flanschplatte (66c) und der Frontplatte (67b) zu einem Flanschkasten (80b) formschlüssig ineinander gesteckt und mit Hilfe der Zuganker (68c) auf Spannung fest zusammengeschraubt. Der Elektromotor (56b) sitzt im Flanschkasten (80) fest auf der Flanschplatte (66c) und treibt mit seinem Kettenrad (75a) die Antriebs- und Synchronisationskette (41b) der beiden Schlitten (3). Auf zwei der Zuganker (68c) sind Andruckrollen (76) drehbar gelagert. Sie drücken die Kette (41b) in das Kettenrad (75a) hinein, damit die Kette stets mit dem Kettenrad im Eingriff bleibt. Die Antriebs- und Synchronisationskette (41b) kann durchgehend aus einer endlosen Kette bestehen, die von einem einzigen Kettenrad (75a) angetrieben wird. Sie kann auch aus zwei separaten Teilen, je eine geschlossene Kette pro Fingermodul, bestehen. In diesem Fall sitzen auf der Motorwelle zwei Kettenräder, je ein separates Kettenrad mit einer geschlossenen Kette für jedes Fingermodul.

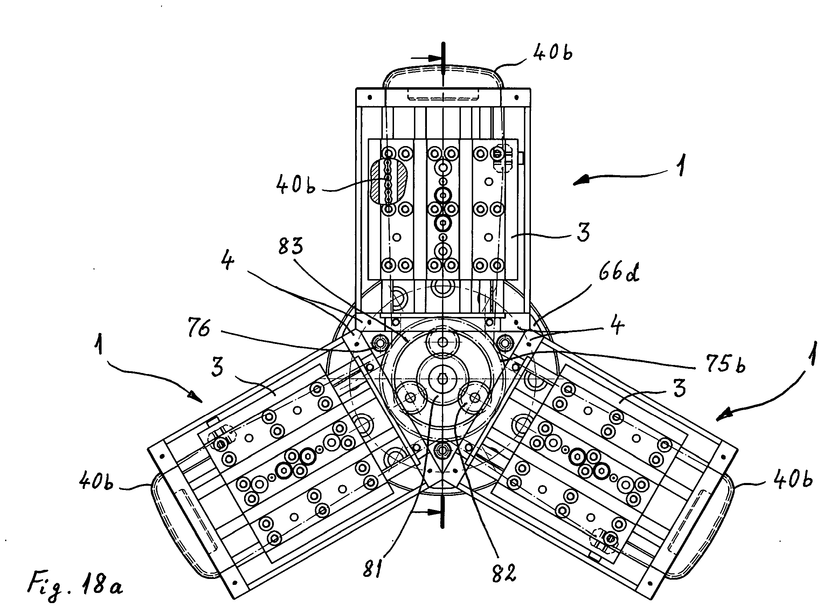

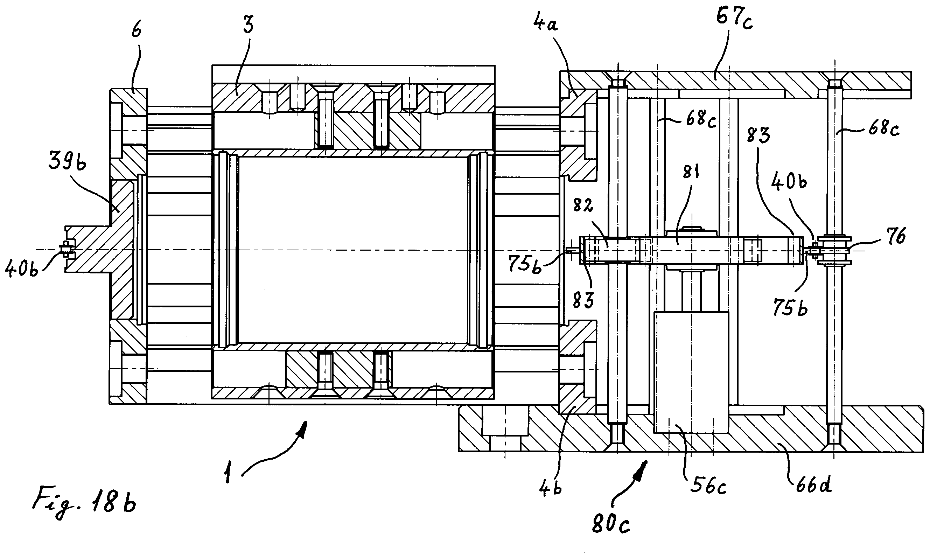

Gemäß Fig. 18 sind drei Fingermodule (1) an ihren inneren Stirnseiten (4) zu einem geschlossenen Dreieck zusammengesetzt und in die Flanschplatte (66d) sowie Frontplatte (67c) formschlüssig eingesetzt und mit Hilfe der Zuganker (68c) zu einem sehr stabilen Flanschkasten (80c) auf Spannung zusammengeschraubt. Die Schlitten (3) der Fingermodule (1) werden mit einer geschlossenen Kette (40b) synchron angetrieben. Die Kette (40b) wird im Flanschkasten (80c) über die Umlenk- und Andruckrollen (76) von einem Fingermodul zum nächsten umgelenkt und seitlich geführt. Die Umlenk- und Andruckrollen (76) sind auf den Zugankern (68c) drehbeweglich, jedoch axial nicht verschiebbar, gelagert. Im Flanschkasten (80c) befindet sich ein Elektromotor (56c) mit einem Planetengetriebe bestehend aus dem Sonnenrad (81), den Planetenrädern (82) und dem Hohlrad (83). Das Hohlrad (83) besitzt au-ßenseitig das Kettenrad (75b), das mit der Antriebs- und Synchronisationskette (40b), vorzugsweise an den Umlenkstellen, im Eingriff steht.

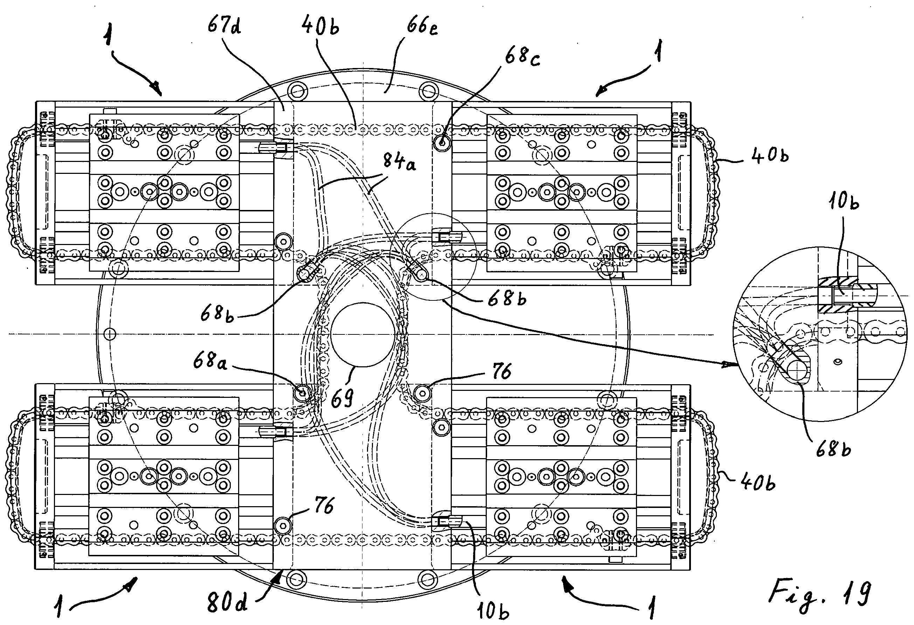

Gemäß Fig. 19 ist aus den inneren Stirnseiten von vier pneumatisch betätigten Fingermodulen (1), die mit Hilfe der Zuganker (68a, 68b, 68c) zwischen der Flanschplatte (66e) und der Frontplatte (67d) gegen das rohrförmige Teil (69) eingespannt sind, der Flanschkasten (80d) gebildet. Vier Zuganker (68a, 68b) dienen zur Umlenkung des Antriebs- und Synchronisationselementes (40b), von denen zwei (68b) zusätzlich als Versorgungsleisten zur Versorgung der Fingermodule mit Druckmittel dienen. Die Schläuche (84) verbinden die Anschlüsse der Versorgungsleisten (68b) mit den Druckmittel führenden Stangen (10b) in den inneren Stirnseiten der Fingermodule (1).

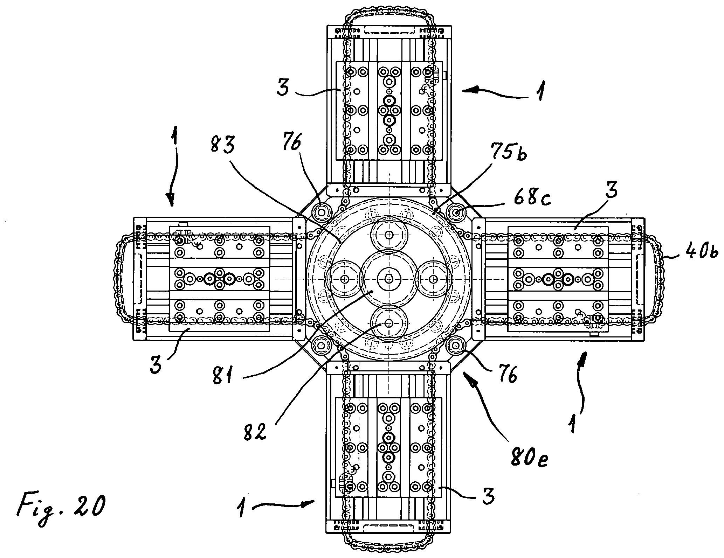

Gemäß Fig. 20 sind aus den inneren Stirnseiten von vier Fingermodulen (1) ohne eigene Antriebseinheit ein Flanschkasten (80e) für einen zentrischen Vierfinger-Greifmechanismus gebildet. Im Flanschkasten (80e) befindet sich ein Elektromotor mit einem Planetengetriebe, bestehend aus dem Sonnenrad (81), den Planetenrädern (82) und dem Hohlrad (83). Das Hohlrad (83) ist mit einem Kettenrad (75b) verbunden, das an den vier Umlenk- und Andruckrollen (76) in die Antriebs- und Synchronisationskette (40b) eingreift und die Schlitten (3) synchron antreibt.

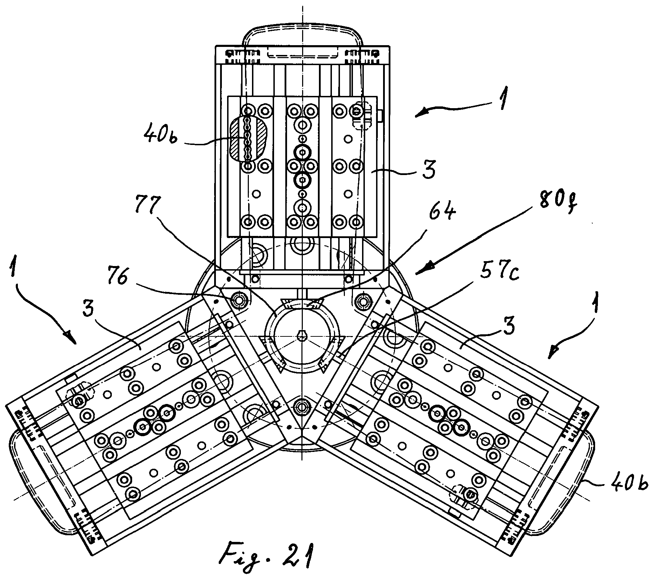

Gemäß Fig. 21 sind aus drei Fingermodulen (1) mit je einem Spindeltrieb als Betätigungseinheit des Schlittens (3) ein zentrischer Dreifinger-Greifmechanismus zusammengesetzt. Im Flanschkasten (80f) befindet sich ein Elektromotor, an dessen Rotorwelle das zentrale Kegelrad (77) befestigt ist. An den Spindelwellen (57c) befinden sich die Kegelräder (64), die mit dem großen und zentralen Kegelrad (77) des Elektromotors im Eingriff stehen. Der Elektromotor treibt die Spindelwellen aller Fingermodule (1) gemeinsam und synchron an. Die Synchronisationskette (40b) ist bei diesem Greifmechanismus nicht erforderlich. Sie dient jedoch zur besseren und gleichmäßigen Lastenverteilung auf die Kegelräder (64) bei asymmetrischer Kraftwirkung auf einen der Greiferfinger. Damit trägt die Synchronisationskette auch zur gleichmäßigen Abnutzung der Zähne des Kegelradgetriebes bei.

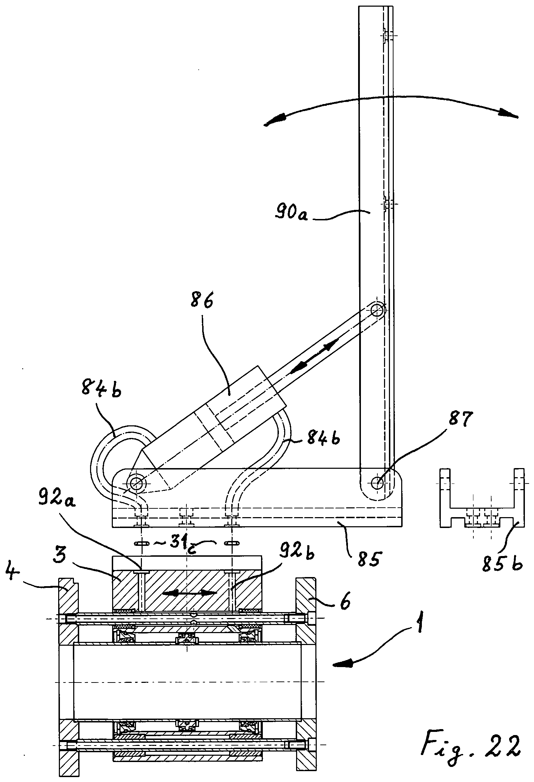

Gemäß Fig. 22 besitzt der Schlitten (3) der pneumatisch betätigten Schlitteneinheit an seiner Außenmantelfläche Anschlussbohrungen (92a, 92b), die mit den Druckmittel führenden Bohrungen (20k, 20o) des Schlittens verbunden sind. Von diesen Anschlüssen führen Leitungen (84b) das Druckmittel entweder direkt oder über Bohrungen in den Träger (85) des Greiferfingers zur Betätigungseinheit (86), die den Greiferfinger (90a) um die Drehachse (87) hin und her schwenkt. Die Dichtungen (31c) dichten die Anschlussbohrungen des Schlittens (3) gegenüber den Anschlussbohrungen des Trägers (85) ab.

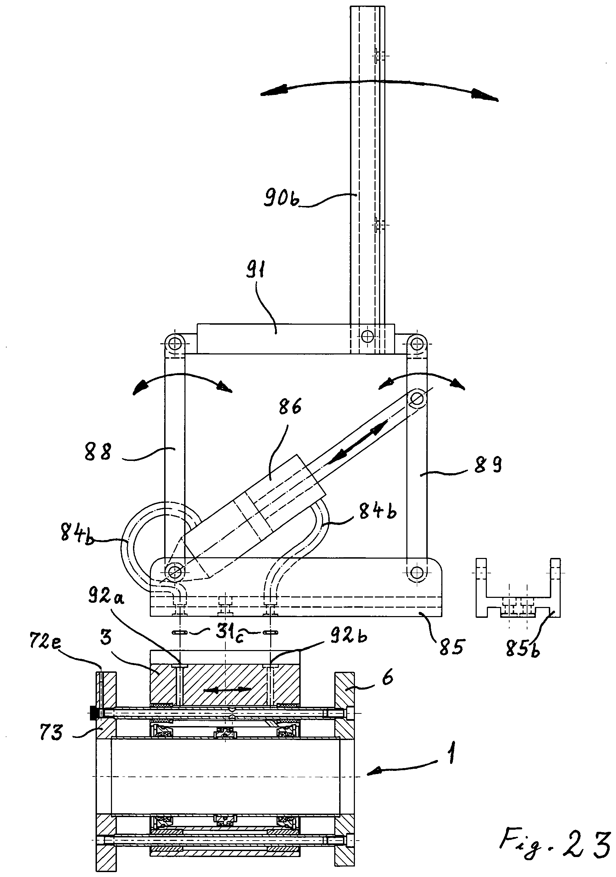

Gemäß Fig. 23 ist der Greiferfinger (90b) an der Koppel (91) eines Gelenkvierecks (85, 88, 89, 91) als ein Führungsgetriebe befestigt. Das Führungsgetriebe sitzt auf dem Schlitten (3) des Fingermoduls (1). Die Druckmittel betätigte Betätigungseinheit (86) greift mit ihren beiden Enden, Zylinder und Kolbenstange, an zwei Lenkern (88, 89) oder (85, 89) des Führungsgetriebes und verleiht dem Greiferfinger eine zusätzliche Bewegung oder einen größeren Hub, während der Schlitten sich in die eine oder andere Richtung bewegt. Der Träger (85) des Greiferfingers (90b) und des Führungsgetriebes (85, 88, 89, 91) ist derart profiliert (85b), dass er formschlüssig in die Profilnuten des Schlittens (3) an unterschiedlichen Stellen hinein passt und befestigt werden kann. Die Dichtungen (31c) dichten die Anschlussbohrungen des Trägers (85) gegenüber den Anschlussbohrungen (92a, 92b) des Schlittens (3) ab.

## Patentansprüche

1. Greifmechanismus für Roboter, Maschinen und Handhabungsgeräte mit wenigstens einem Fingermodul (1),
das aus einer Schlitteneinheit (2, 3) besteht, wobei der Schlitten (3) mittelbar oder unmittelbar einen Greiferfinger trägt, der gegen einen anderen feststehenden oder beweglichen Greiferfinger arbeitet,
**dadurch gekennzeichnet,**
**dass** das Gehäuse (2) der Schlitteneinheit aus einem mindestens vierseitig geschlossenen Rahmen (4, 5, 6, 7) besteht, in dem der Schlitten auf mehreren parallel zu einander, vorzugswe+ise zylindrisch, angeordneten und zwischen zwei Stirnseiten des Rahmens auf Zug vorgespannten Führungsstangen (10) gleitet.

2. Greifmechanismus nach Anspruch 1, **dadurch gekennzeichnet,**
**dass** das Gehäuse (2) der Schlitteneinheit (2, 3) eine fünfte Seite (8) als Bodenplatte besitzt, die formschlüssig in den Rahmen hineingreift und dass die Führungsstangen (10) alle Teile des Gehäuses gegeneinander formstabil spannen.

3. Greifmechanismus nach Anspruch 1 oder 2, **dadurch gekennzeichnet,**
**dass** sich zwischen den beiden Stirnseiten (4, 6) des Rahmens inmitten der Führungsstangen (10) ein Element, eine Stange, Welle oder ein Rohr (9), befindet, das mit Absätzen formschlüssig in die beiden Stirnseiten (4, 6) des Rahmens eingesetzt ist und die Durchbiegung und die Spannung der Stirnseiten, hervorgerufen durch die Führungsstangen, definiert begrenzt.

4. Greifmechanismus nach Anspruch 1, **dadurch gekennzeichnet,**
**dass** der Schlitten (3) der Schlitteneinheit aus einem Strangpressprofil mit einer längs profilierten Fläche, einer großen Bohrung (19) in der Mitte und vielen kleineren Bohrungen (20) zylinderförmig und koaxial zu der großen Bohrung angeordnet, gefertigt ist.

5. Greifmechanismus nach Anspruch 1, **dadurch gekennzeichnet,**
**dass** die Führungsstangen (10) sowohl in den Stirnseiten (4, 6) des Rahmens als auch beim Ein- und Ausgang und vorzugsweise auch in der Mitte der kleinen Bohrungen (20) des Schlittens seitlich geführt sind, in der einen Stirnseite (4) unbeweglich fest und in der anderen Stirnseite (6) mit axialem Spiel verschraubt sind.

6. Greifmechanismus nach Anspruch 1, **dadurch gekennzeichnet,**
**dass** der Antrieb und/oder die Synchronisation des Schlittens mit einem Zugmittel (40), Band, Riemen oder Kette erfolgen, das durch zwei Bohrungen (20e, 20m) des Schlittens (3) hindurch läuft und in einer der beiden Bohrungen mit dem Schlitten (3) befestigt ist.

7. Greifmechanismus nach Anspruch 6, **dadurch gekennzeichnet,**
**dass** die Spannung, Führung und Umlenkung des Zugmittels (40) und die Feinjustierung der Position des Schlittens (3) über ein Umlenk- und Führungsteil (39) erfolgen, das sich in der äußeren Stirnseite (6) des Rahmens durch einen zylindrischen Abschnitt (14) zentriert und in einer Längsnut (37) gegen Verdrehung sichert, und das durch mindestens einen Spann- und Justierring (38) axial verschoben wird.

8. Greifmechanismus nach Anspruch 4, **dadurch gekennzeichnet,**
**dass** die zentrale Bohrung (19) des Schlittens (3) der Gewichtsreduzierung oder der Aufnahme eines pneumatischen, hydraulischen oder elektromotorischen Antriebes dient.

9. Greifmechanismus nach Anspruch 3 und 8, **dadurch gekennzeichnet,**
**dass** das zwischen den beiden Stirnseiten (4, 6) des Rahmens eingespannte Rohr als Kolbenrohr (9) des pneumatischen oder hydraulischen Antriebes dient.

10. Greifmechanismus nach Anspruch 9, **dadurch gekennzeichnet,**
**dass** das Kolbenrohr (9) zweiteilig (9a, 9b) gestaltet ist und den Ringkolben (29b) zwischen seinen Hälften formschlüssig einspannt.

11. Greifmechanismus nach Anspruch 3 und 8, **dadurch gekennzeichnet,**
**dass** sich in der zentralen Bohrung (19) des Schlittens (3) eine Spindelmutter (59) eines Spindeltriebes (57, 59) befindet, dessen Spindelwelle (57a, 57c) zwischen den beiden Stirnseiten (4, 6) des Rahmens drehbar eingespannt ist und angetrieben wird.

12. Greifmechanismus nach Anspruch 3 und 8, **dadurch gekennzeichnet,**
**dass** sich in der zentralen Bohrung (19) des Schlittens (3) ein Elektromotor (62, 63) mit einem Hohlläufer befindet, dessen hohler Läufer (63) die Spindelmutter eines Spindeltriebes (57b, 63) bildet, und dessen Spindelwelle (57b) zwischen den beiden Stirnseiten (4, 6) des Rahmens fest eingespannt ist.

13. Greifmechanismus nach einem der vorher genannten Ansprüche, **dadurch gekennzeichnet,**
**dass** das Umlenk- und Führungsteil (39) eine Doppelnut (79a) mit einem Mittelsteg (79b) für eine Antriebs- und Synchronisationskette (40b) aufweist.

14. Greifmechanismus nach einem der vorher genannten Ansprüche, **dadurch gekennzeichnet,**
**dass** die inneren Stirnseiten (4) der Schlitteneinheiten formschlüssig zwischen der Flanschplatte (66) und der Frontplatte (67) eingespannt und durch Zuganker (68) auf Druck vorgespannt sind und zusammen den Flanschkasten (80) bilden.

15. Greifmechanismus nach Anspruch 14, **dadurch gekennzeichnet,**
**dass** die Zuganker (68b) als Versorgungsleisten des Druckmittels zwischen dem Flansch und den einzelnen Schlitteneinheiten und/oder als Umlenk- und Führungsteil für das Antriebs- und Synchronisationselement (40) dienen.

16. Greifmechanismus nach Anspruch 14, **dadurch gekennzeichnet,**
**dass** der Elektromotor (56b, 56c) im Flanschkasten (80b, 80c, 80e) platziert ist und direkt oder mittels eines Zahnrad- oder Planetengetriebes das Antriebs- und Synchronisationselement (40) antreibt.

17. Greifmechanismus nach Anspruch 14, **dadurch gekennzeichnet,**
**dass** der Elektromotor im Flanschkasten (80f) mittels eines Kegelradgetriebes (64, 77) die Spindelwelle (57c) der Schlitteneinheiten aller Fingermodule (1) synchron antreibt.

18. Greifmechanismus nach einem der vorher genannten Ansprüche, **dadurch gekennzeichnet,**
**dass** der Greiferfinger (90a, 90b) schwenkbar oder als Koppel eines Führungsgetriebes (85, 88, 89, 91) mit einem Träger (85) befestigt ist, der auf dem Schlitten der Schlitteneinheit sitzt.

## Claims

1. Gripping mechanism for robots, machines and handling equipment, featuring at least one finger module (1) consisting of a sliding unit (2, 3) with the slide element (3), which bears directly or indirectly a gripper finger, which acts against another movable or fixed gripper finger. The system is **characterized by** the fact that the case (2) of the sliding unit consists of a frame (4, 5, 6, 7) closed on at least four sides, in which the slide element runs between two end faces on several preferably cylindrical guide rods (10), prestressed in tension and parallel to each other.

2. Gripping mechanism acc. to claim 1, **characterized by** the fact that the case (2) of the sliding unit (2,3) features a fifth side (8) as bottom plate, interlocking into the frame, and with the guide rods (10) pressing all parts of the case against each other, thus ensuring a dimensionally stable configuration.

3. Gripping mechanism acc. to claim 1 or 2, **characterized by** the fact that between the end faces (4, 6), an element -whether rod, shaft or tube (9)- is inserted centrally between the guide rods (10), featuring steps interlocking into the two end faces (4, 6) of the frame, intended to limit in a defined manner the deflection and the stress exerted on these end faces by the guide rods.

4. Gripping mechanism acc. to claim 1, **characterized by** the fact that the slide Element (3) of the sliding unit is made of an extruded section with a surface profiled in longitudinal direction, a large bore (19) in the center and numerous smaller bores (20), arranged cylindrically and coaxially to the large bore.

5. Gripping mechanism acc. to claim 1, **characterized by** the fact that the guide rods (10) are laterally guided, within the end faces (4,6) of the frame, as well as at the in- and outlet and preferably also in the center of the small bores (20) of the slide. They are bolted firmly to one of the end faces (4), and with axial free motion to the other one (6).

6. Gripping mechanism acc. to claim 1, **characterized by** the fact that the drive and/or the synchronization of the slide element take place by means of a traction mechanism (40), - whether band, belt or chain-, which is guided across two bores (20e, 20m) of the slide element (3), and fixed to slide element (3) inside one of these bores.

7. Gripping mechanism acc. to claim 6, **characterized by** the fact that clamping, guiding and direction change of the traction mechanism (40), as well as fine tuning of position of the slide element, are carried out by means of a deflection / guiding part (39) centered within the outer end face (6) of the frame by means of a cylindrical section (14), secured against torsion by means of a longitudinal groove (37), and axially displaced by means of at least one clamping and adjusting ring (38).

8. Gripping mechanism acc. to claim 4, **characterized by** the fact that the central bore (19) of slide element (3) is useful to reduce the weight, but can also act as receptacle for a pneumatic, hydraulic or electro-motoric drive.

9. Gripping mechanism acc. to claims 3 and 8, **characterized by** the fact that the tube clamped between the two end faces (4, 6) of the frame, is used as piston tube (9) of the pneumatic or hydraulic drive.

10. Gripping mechanism acc. to claim 9, **characterized by** the fact that the piston tube (9) is designed as a two-piece item (9a, 9b), positively clamping the annular piston (29b) between these two halves.

11. Gripping mechanism acc. to claims 3 and 8, **characterized by** the fact that the central bore (19) of the slide element (3) houses a spindle nut (59) of a spindle drive (57, 59) with its spindle shaft (57a, 57c) being rotatably installed between the two end faces (4, 6) of the frame and being actuated.

12. Gripping mechanism acc. to claims 3 and 8, **characterized by** the fact that an electric motor (62, 63) is placed within the central bore (19) of the slide element (3), featuring a hollow rotor, with the rotor (63) representing the spindle nut of a spindle drive (57b, 63) with the spindle shaft (57b) firmly being clamped between the end faces (4, 6) of the frame.

13. Gripping mechanism acc. to one of the previously mentioned claims **characterized by** the fact that the deflection / guiding part (39) features a double groove (79a) with a central web (79b) for a drive and synchronization chain (40b).

14. Gripping mechanism acc. to one of the previously mentioned claims **characterized by** the fact that the internal end faces (4) of the sliding units are clamped interlocking between flange plate (66) and front plate (67), prestressed in compression by tie rods (68) and together representing the flange case (80).

15. Gripping mechanism acc. to claim 14, **characterized by** the fact that the tie rods (68b) act as supply rails for pressurizing medium between flange and individual sliding units and/or as deflection / guiding part for the drive and synchronization element (40).

16. Gripping mechanism acc. to claim 14, **characterized by** the fact that the electric motor (56b, 56c) is placed within the flange case (80b, 80c, 80e). This motor actuates directly or by means of a gear transmission or planetary gear, the drive and synchronization element (40).

17. Gripping mechanism acc. to claim 14, **characterized by** the fact that the electric motor within the flange case (80f) synchronously drives the spindle shaft (57c) of the sliding units of all finger modules (1), by means of a bevel gear (64, 77).

18. Gripping mechanism acc. to one of the previously mentioned claims, **characterized by** the fact that the gripper finger (90a, 90b) is fixed in pivoting configuration, or as coupler of a guiding gear (85, 88, 89, 91) with a support (85), installed on the slide element of the sliding unit.

## Revendications

1. Mécanisme de préhension pour des robots, des machines des unités de maniement, équipé d'au moins un module de doigts (1) se composant d'une unité de chariot (2, 3) avec un chariot (3) qui porte de manière directe ou indirecte un doigt de préhension, qui agit contre un autre doigt fixe ou mobile. Le système est **caractérisé par le fait que** la boîte (2) de l'unité de chariot se compose d'un cadre, qui est fermé au moins de quatre côtés (4, 5, 6, 7), et dans lequel le chariot se déplace entre deux côtés frontaux sur plusieurs barres conductrices (10) préférablement cylindriques, précontraintes en traction et orientées parallèlement l'une à l'autre.

2. Mécanisme de préhension selon revendication 1, **caractérisé par le fait que** la boîte (2) de l'unité de chariot (2, 3) dispose d'un cinquième côté (8) en fonction de plaque de base, qui s'insère de manière crabotée dans le cadre, avec les barres conductrices (10) pressant toutes les parties de la boîte l'une contre l'autre, ainsi assurant une configuration indéformable.

3. Mécanisme de préhension selon revendication 1 ou 2, **caractérisé par le fait qu'**un élément (9) -soit barre, soit arbre ou tuyau- se trouve introduit entre les deux côtés frontaux (4, 6) du cadre centralement au milieu des barres conductrices (10). Celui-ci dispose de gradins qui s'insèrent de manière crabotée dans les deux cotés frontaux (4, 6) du cadre, ainsi limitant de manière définie leur fléchissement et la tension provoquée par les barres conductrices.

4. Mécanisme de préhension selon revendication 1, **caractérisé par le fait que** le chariot (3) de l'unité de chariot se compose d'un profilé extrudé avec une surface profilée en direction longitudinale, d'une large forure (19) au centre et de nombreuses forures mineures (20), arrangées en configuration cylindrique et coaxiale par rapport à la forure majeure.

5. Mécanisme de préhension selon revendication 1, **caractérisé par le fait que** les barres conductrices (10) sont latéralement guidées entre les deux côtés frontaux (4, 6) du cadre, aussi bien qu'à l'entrée et à la sortie, et préférablement en plus au centre des petites forures (20) du chariot. Elles sont vissées de manière fixe à l'un des côtés frontaux (4), et avec un jeu axial à l'autre (6).

6. Mécanisme de préhension selon revendication 1, **caractérisé par le fait que** l'entraînement et/ou la synchronisation du chariot s'effectue à l'aide d'un élément de traction (40), c'est-à-dire par une bande, une courroie ou une chaîne, qui est guidée au travers de deux forures (20e, 20m) du chariot (3) et attachée au chariot (3) à l'intérieur de l'une de ces deux forures.

7. Mécanisme de préhension selon revendication 6, **caractérisé par le fait que** le serrage, le guidage et le changement de la direction de l'élément de traction (40), et également le réglage fin de la position du chariot (3) s'effectuent à l'aide d'un élément de déviation / de guidage (39), qui est centré à l'intérieur du côté frontal extérieur (6) du cadre par une section cylindrique (14), protégé contre la torsion à l'aide d'une rainure longitudinale (37), et déplacé en direction axiale à l'aide d'au moins un anneau de serrage et d'ajustage (38).

8. Mécanisme de préhension selon revendication 4, **caractérisé par le fait que** la forure centrale (19) du chariot (3) sert à réduire le poids, et peut également servir de logement d'un entraînement pneumatique, hydraulique ou électromoteur.

9. Mécanisme de préhension selon revendication 3 et 8, **caractérisé par le fait que** le tuyau enserré entre les deux côtés frontaux (4, 6) du cadre, est utilisé comme barillet (9) de l'entraînement pneumatique ou hydraulique.

10. Mécanisme de préhension selon revendication 9, **caractérisé par le fait que** le barillet (9) représente un élément composé de deux parties (9a, 9b), et le piston annulaire (29b) se trouve attaché de manière crabotée entre ces deux demi-éléments.

11. Mécanisme de préhension selon revendication 3 et 8, **caractérisé par le fait que** la forure centrale (19) du chariot (3) comprend un écrou de broche (59) d'un mécanisme à vis sans fin (57, 59) dont l'arbre de broche (57a, 57c) est installé de manière pivotante entre les deux côtés frontaux (4, 6) du cadre, et est actionné.

12. Mécanisme de préhension selon revendication 3 et 8, **caractérisé par le fait qu'**un moteur électrique (62, 63) se trouve intégré à la forure centrale (19) du chariot (3), équipé d'un rotor creux (63) qui en même temps représente l'écrou de broche d'un mécanisme à vis sans fin (57b, 63) dont l'arbre de broche (57b) est fermement enserré entre les deux côtés frontaux (4, 6) du cadre.

13. Mécanisme de préhension selon l'une des revendications mentionnées en haut, **caractérisé par le fait que** la pièce de déviation / de guidage (39) dispose d'une double rainure (79a) avec un étançon central (79b) pour une chaîne de transmission et de synchronisation (40b).

14. Mécanisme de préhension selon l'une des revendications mentionnées en haut, **caractérisé par le fait que** les côtés frontaux intérieurs (4) des unités de chariot sont serrés de manière crabotée entre la plaque de bride (66) et la plaque frontale (67), précontraints en compression par des tiges de traction (68), représentant ensemble la boîte de bride (80).

15. Mécanisme de préhension selon revendication 14, **caractérisé par le fait que** les tiges de traction (68b) agissent en fonction de barres d'alimentation en agent de compression entre la bride et les différentes unités de chariot, et/ou en fonction de pièce de déviation / de guidage pour l'élément de transmission et de synchronisation (40).

16. Mécanisme de préhension selon revendication 14, **caractérisé par le fait que** le moteur électrique (56b, 56c) est installé dans la boîte de bride (80b, 80c, 80e). Il actionne directement, ou à l'aide d'une transmission par engrenage ou d'un engrenage planétaire, l'élément de transmission et de synchronisation (40).

17. Mécanisme de préhension selon revendication 14, **caractérisé par le fait que** le moteur électrique dans la boîte de bride (80f), à l'aide d'un engrenage conique (64,77), actionne de manière synchrone l'arbre de broche (57c) des unités de chariot de tous les modules de doigt (1).

18. Mécanisme de préhension selon l'une des revendications mentionnées en haut **caractérisé par le fait que** le doigt de préhension (90a, 90b) est attaché en configuration pivotée ou comme bielle d'une transmission de guidage (85, 88, 89, 91) avec un support (85) qui est installé sur le chariot de l'unité de chariot.
